(19) **Europäisches Patentamt / European Patent Office / Office européen des brevets**

(11) **EP 3 402 258 A1**

(12) # EUROPEAN PATENT APPLICATION
published in accordance with Art. 153(4) EPC

(43) Date of publication:
**14.11.2018 Bulletin 2018/46**

(21) Application number: **17738083.9**

(22) Date of filing: **04.01.2017**

(51) Int Cl.:
***H04W 52/24*** (2009.01)

(86) International application number:
**PCT/CN2017/070125**

(87) International publication number:
**WO 2017/121269 (20.07.2017 Gazette 2017/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.01.2016 CN 201610021159**

(71) Applicant: **Sony Corporation**
**Tokyo 108-0075 (JP)**

(72) Inventors:
• **ZHAO, Youping**
  **Beijing 100044 (CN)**
• **DING, Wei**
  **Beijing 100044 (CN)**
• **GUO, Xin**
  **Beijing 100028 (CN)**
• **SUN, Chen**
  **Beijing 100028 (CN)**

(74) Representative: **D Young & Co LLP**
**120 Holborn**
**London EC1N 2DY (GB)**

(54) **ELECTRONIC DEVICE, USER EQUIPMENT AND WIRELESS COMMUNICATION METHOD IN WIRELESS COMMUNICATION SYSTEM**

(57) The present disclosure relates to an electronic device, a user equipment and a wireless communication method in a wireless communication system. The wireless communication system comprises multiple user equipments and at least one base station. The electronic device according to the present disclosure comprises: one or more processing circuits, configured to execute the following operations: obtaining position information and waveform parameter information of a user equipment; set a waveform parameter according to the position information and the waveform parameter information of the user equipment; and obtain spectrum resource information of another user equipment, and allocate a spectrum resource of another user equipment to the user equipment, so the user equipment uses the spectrum resource of another user equipment according to the set waveform parameter. By using the electronic device and the wireless communication method according to the present disclosure, users in a wireless communication system can use same spectrum resources to share non-orthogonal spectrums, thereby improving the spectrum utilization rate and throughput.

Fig.2

## Description

This application claims priority to the Chinese Patent Application No. 201610021159.0, titled "ELECTRONIC DEVICE, USER EQUIPMENT AND WIRELESS COMMUNICATION METHOD IN WIRELESS COMMUNICATION SYSTEM" and filed with the Chinese State Intellectual Property Office on January 13, 2016, which is incorporated herein by reference in its entirety.

## FIELD

The present disclosure relates to the technical field of wireless communication, and particularly to an electronic device in a wireless communication system and a wireless communication method in the wireless communication system.

## BACKGROUND

This part provides background information related to the present disclosure, and is not necessarily the conventional technology.

With the development of wireless communication technology, frequency spectrum resources become more and more insufficient. Existing research indicates that a resource utilization rate of the allocated licensed frequency spectrum is low. Therefore, an urgent problem to be solved is how to improve a spectrum utilization ratio. Cognitive radio is intelligent evolvement of software radio technology. In the cognitive radio, a secondary user (SU) which accesses to a frequency spectrum opportunistically can intelligently use an idle frequency spectrum by sensing and analyzing the frequency spectrum, to avoid interference with a primary user (PU) having the licensed frequency band. The primary user has the highest priority level for using the licensed frequency band. In a case that the primary user is to use the licensed frequency band, the secondary user should stop using the frequency spectrum timely, and yield the channel to the primary user. A problem of frequency spectrum resource shortage can be ameliorated greatly with the introduction of the cognitive radio technology.

In the cognitive radio system, however, since different modulated signals are transmitted in the same frequency band, a primary user operating in the same frequency band as a secondary user may be interfered by the signal transmitted from the secondary user. Interference to a primary user should be taken into account when allocating a frequency spectrum to a secondary user. That is, the frequency spectrum used by the primary user cannot be used by the secondary user. In this case, limited spectrum resources can be used by the secondary user. In another aspect, secondary users in adjacent systems may share the frequency spectrum, and interference may be caused in the case of sharing the frequency spectrum.

Non-orthogonal multiple access (NOMA) is also a key technology for improving the spectrum utilization rate. The basic concept of the NOMA is that non-orthogonal transmission is performed at the transmitting end and interference information is introduced initiatively, and serial interference cancellation is performed at the receiving end to implement correct demodulation. Although the complexity of a receiver is added for this design, the spectrum utilization rate can be improved greatly.

A non-orthogonal frequency spectrum sharing method is provided in the present disclosure, in which, the basic concept of the NOMA is extended to be applied into a wireless communication system including one or more cells, particularly into the cognitive radio system, in order to solve at least one of the above technical problems.

## SUMMARY

This part provides a general overview of the present disclosure, and is not full disclosure of all scope or all features of the present disclosure.

The present disclosure is to provide an electronic device in a wireless communication system and a wireless communication method in the wireless communication system, so that different users in the wireless communication system can use the same frequency spectrum resource, thereby implementing non-orthogonal frequency spectrum sharing and improving a spectrum utilization ratio and the throughput.

An electronic device in a wireless communication system is provided in an aspect of the present disclosure. The wireless communication system includes multiple user equipments and at least one base station. The electronic device includes at least one processing circuit. The at least one processing circuit is configured to: acquire location information and waveform parameter information of the user equipment; set waveform parameters based on the location information and the waveform parameter information of the user equipment; and acquire frequency spectrum resource information of other user equipment, allocate a frequency spectrum resource of the other user equipment to the user equipment based on the frequency spectrum resource information, so that the user equipment uses the frequency spectrum resource of the other user equipment based on the set waveform parameter.

An electronic device in a wireless communication system is provided in another aspect of the present disclosure. The wireless communication system at least includes a first cell and a second cell, and the electronic device is located in the first cell. The electronic device includes at least one processing circuit. The at least one processing circuit is configured to: acquire location information of a user equipment in the first cell to inform a spectrum coordinator in a core network; acquire a waveform parameter and demodulation time information from the spectrum coordinator to inform the user equipment; acquire frequency spectrum resource information of other user equipment in the second cell from the spectrum coordinator to inform the user equipment; and wirelessly communicating with the user equipment using a frequency spectrum resource of the other user equipment based on the acquired waveform parameter and the acquired demodulation time information.

A user equipment in a wireless communication system is provided in another aspect of the present disclosure. The wireless communication system includes multiple user equipments and at least one base station. The user equipment includes a transceiver and at least one processing circuit. The at least one processing circuit is configured to: cause the transceiver to transmit location information of the user equipment to a base station serving the user equipment; cause the transceiver to receive a waveform parameter and demodulation time information from the base station; cause the transceiver to receive frequency spectrum resource information of other user equipment from the base station; and wirelessly communicate with the base station using a frequency spectrum resource of the other user equipment based on the received waveform parameter and the received demodulation time information.

A wireless communication method in a wireless communication system is provided in another aspect of the present disclosure. The wireless communication system includes multiple user equipments and at least one base station. The method includes: acquiring location information and waveform parameter information of a user equipment; setting waveform parameters based on the location information and the waveform parameter information of the user equipment; and acquiring frequency spectrum resource information of other user equipment, and allocating a frequency spectrum resource of the other user equipment to the user equipment based on the frequency spectrum resource information, so that the user equipment uses the frequency spectrum resource of the other user equipment based on the set waveform parameter.

A wireless communication method in a wireless communication system is provided in another aspect of the present disclosure. The wireless communication system at least includes a first cell and a second cell. The method includes: acquiring location information of a user equipment in the first cell, to inform a spectrum coordinator in a core network; acquiring a waveform parameter and demodulation time information from the spectrum coordinator, to inform the user equipment; acquiring frequency spectrum resource information of other user equipment from the spectrum coordinator, to inform the user equipment; and wirelessly communicating with the user equipment using a frequency spectrum resource of the other user equipment, based on the acquired waveform parameter and the acquired demodulation time information.

A wireless communication method in a wireless communication system is provided in another aspect of the present disclosure. The wireless communication system includes a multiple user equipments and at least one base station. The method includes: transmitting location information of a user equipment to a base station serving the user equipment; receiving a waveform parameter and demodulation time information from the base station; receiving frequency spectrum resource information of other user equipment from the base station; and wirelessly communicating with the base station using a frequency spectrum resource of the other user equipment, based on the received waveform parameter and the received demodulation time information.

With the electronic device in the wireless communication system and the wireless communication method in the wireless communication system in the present disclosure, the electronic device can acquire location information of the user equipment, and set a waveform parameter based on the location information, so that different users in the wireless communication system can correctly demodulate data in a case of using the same frequency spectrum resource, thereby improving a spectrum utilization ratio and throughput of the system.

In the description herein, a further applicable region becomes apparent. Description and particular examples in the overview are only illustrative, and are not intended to limit the scope of the present disclosure.

## BRIEF DESCRIPTION OF THE DRAWINGS

The drawings described herein are used for illustrating the selected embodiments, rather than all of the possible embodiments, and are not intended to limit the scope of the present disclosure. In the drawings:

Fig. 1(a) is a schematic diagram showing a scenario of non-orthogonal frequency spectrum sharing according to an embodiment of the present disclosure;

Fig. 1(b) is a schematic diagram showing another scenario of non-orthogonal frequency spectrum sharing according to an embodiment of the present disclosure;

Fig. 2 is a structural block diagram of an electronic device in a wireless communication system according to an embodiment of the present disclosure;

Fig. 3 is a schematic diagram showing a scenario in which a strong interference region is determined in the embodiment of the present disclosure;

Fig. 4 is a schematic diagram showing a process of configuring a power adjustment factor in the embodiment of the present disclosure;

Fig. 5 is a schematic diagram showing a process of non-orthogonal frequency spectrum sharing in multiple systems in the embodiment of the present disclosure;

Fig. 6 is a schematic diagram showing a signaling interaction process of non-orthogonal frequency spectrum sharing in multiple systems in the embodiment of the present disclosure;

Fig. 7 is a structural block diagram of another electronic device in a wireless communication system according to an embodiment of the present disclosure;

Fig. 8 is a structural block diagram of a user equipment in a wireless communication system according to an embodiment of the present disclosure;

Fig. 9 is a flow diagram of a wireless communication method according to an embodiment of the present disclosure;

Fig. 10 is a flow diagram of a wireless communication method according to another embodiment of the present disclosure;

Fig. 11 is a flow diagram of a wireless communication method according to another embodiment of the present disclosure;

Fig. 12 is a block diagram showing a first schematic configuration example of an evolution node base station (eNB) to which the present disclosure is applied;

Fig. 13 is a block diagram showing a second schematic configuration example of an eNB to which the present disclosure is applied;

Fig. 14 is a block diagram showing a schematic configuration example of a smart phone to which the present disclosure is applied; and

Fig. 15 is a block diagram showing a schematic configuration example of a car navigation to which the present disclosure is applied.

Although the present disclosure is susceptible to various modifications and substitutions, a specific embodiment thereof is shown in the drawings as an example and is described in detail herein. However, it should be understood that the description for the specific embodiment herein is not intended to limit the present disclosure into a disclosed particular form, but rather, the present disclosure aims to cover all modifications, equivalents and substitutions within the spirit and scope of the present disclosure. It should be noted that, throughout the drawings, a numeral indicates a component corresponding to the numeral.

## DETAILED DESCRIPTION OF THE EMBODIMENTS

Examples of the present disclosure are described now more fully with reference to the drawings. The following description is merely exemplary substantively and is not intended to limit the present disclosure and an application or use thereof.

Exemplary embodiments are provided below to make the present disclosure thorough and convey a scope of the present disclosure to those skilled in the art. Examples of various specific details, such as specific components, devices, and methods, are set forth to provide thorough understanding for the embodiments of the present disclosure. It is apparent to those skilled in the art that the exemplary embodiments may be embodied in multiple different forms without using specific details, and should not be construed as limiting the scope of the present disclosure. In some exemplary embodiments, well-known processes, well-known structures, and well-known technology are not described in detail.

A user equipment (UE) in the present disclosure includes but is not limited to a mobile terminal, a computer, an on-board device and other terminal having a wireless communication function. Furthermore, the UE in the present disclosure may also be the UE itself or a component such as a chip in the UE, depending on a function described. In addition, similarly, a base station in the present disclosure may be for example an eNB or a component such as a chip in the eNB. Accordingly, the technical solution in the present disclosure may be applied into for example a frequency division duplexing (FDD) system and a time division duplexing (TDD) system.

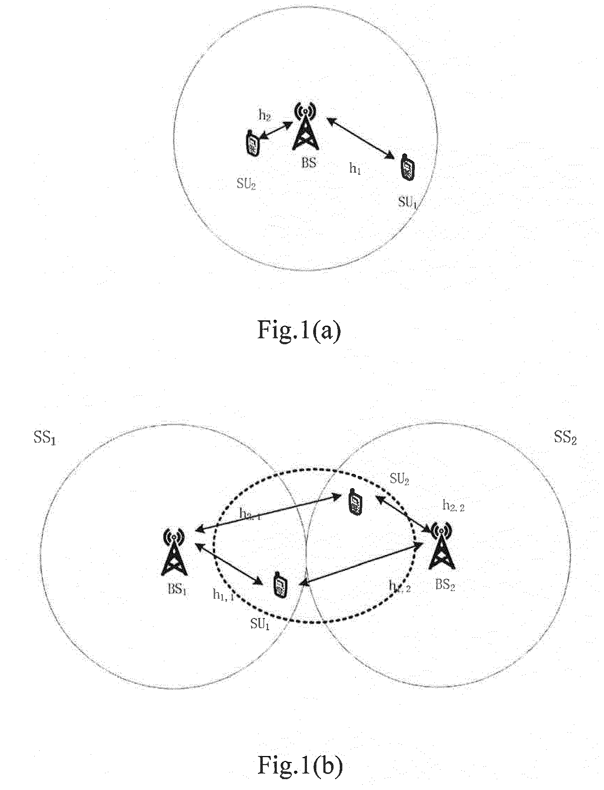

Fig. 1(a) is a schematic diagram showing a scenario of non-orthogonal frequency spectrum sharing according to an embodiment of the present disclosure. As shown in Fig. 1(a), there is a cell in a wireless communication system, a serving base station of the cell is BS, and the cell includes a first user equipment $SU_1$ and a second user equipment $SU_2$. When data transmission is performed between the BS and a user equipment, data of the user equipment may be interfered since the user equipment may receive data transmitted from the BS to other user equipment. The similar interference problem exists when the user equipment transmits data to BS. With taking downlink transmission as an example, $SU_1$ may receive downlink data transmitted from BS to $SU_2$ in a case that BS transmits data to $SU_1$. In this case, $SU_1$ is interfered by the downlink data transmitted from BS to $SU_2$.

In a case that $h_1$ denotes a channel coefficient between BS and $SU_1$, $h_2$ denotes a channel coefficient between BS and $SU_2$, $s_1$ denotes a downlink signal of $SU_1$, $s_2$ denotes a downlink signal of $SU_2$, $x_1$ denotes an uplink signal of $SU_1$, and $x_2$ denotes an uplink signal of $SU_2$, a signal $y_{SU1}$ received by $SU_1$ and a signal $y_{SU2}$ received by $SU_2$ in downlink transmission may be represented as:

$$y_{SU_1} = \left(s_1 + s_2\right) * \mathrm{h}_1 \quad (1)$$

$$y_{SU_2} = \left(s_1 + s_2\right) * \mathrm{h}_2 \quad (2)$$

Similarly, in uplink transmission, a signal $y_{BS}$ received by BS is represented as:

$$y_{BS} = x_1 * \mathrm{h}_1 + x_2 * \mathrm{h}_2 \quad (3)$$

It can be seen that, in uplink transmission in a wireless communication system (a single system) having one cell, a desired signal and an interfering signal arrive at a receiving end through different channels. In downlink transmission, a desired signal and an interfering signal arrive at a receiving end through the same channel.

In order to avoid data interference between different user equipments, the different user equipments may perform transmission using different frequency spectrums or different powers. In such scenario, non-orthogonal frequency spectrum sharing may be implemented with NOMA. With taking downlink transmission as an example, a transmitter of the BS transmits data to $SU_1$ and $SU_2$ using the same frequency spectrum and different powers, and transmits channel information $h_1$ and $h_2$ to the $SU_1$ and $SU_2$. For example, BS transmits data to $SU_1$ with a high power, and transmits data to $SU_2$ with a low power. At a receiving end, $SU_1$ demodulates a data signal directly, and $SU_2$ demodulates an interfering signal first and then determines a data signal. The uplink transmission has a similar process with the downlink transmission. In a data demodulation process of $SU_1$ and $SU_2$, only in a case that a difference between the data signal and the interfering signal is large enough so that the data signal and/or the interfering signal received at the receiving end can meet a demodulated requirement, $SU_1$ and $SU_2$ can correctly demodulate the data signal and the interfering signal.

A waveform parameter is a filter parameter allocated to the transmitter, and similar to a power adjustment factor, is a parameter at a transmitting end, and can affect a power for generating a signal at the transmitting end. Therefore, if a different between signals received at the receiving ends is large enough by reasonably adjusting the waveform parameter at the transmitting end, the receiving ends can correctly demodulate the data signals.

That is, the same frequency spectrum resource may be allocated to different user equipments in the same cell by reasonably setting the parameter for example the waveform parameter and/or the power adjustment factor at the transmitting end in a single system, thereby implementing the frequency spectrum resource sharing.

Fig. 1(b) is a schematic diagram showing another scenario of non-orthogonal frequency spectrum sharing according to the embodiment of the present disclosure.

As shown in Fig. 1(b), the wireless communication system has two adjacent cells, that is, a first cell $SS_1$ and

a second cell $SS_2$. A base station of the cell $SS_1$ is $BS_1$, and a base station of the cell $SS_2$ is $BS_2$. A first user equipment $SU_1$ is located in the cell $SS_1$, and a second user equipment $SU_2$ is located in the cell $SS_2$. The users $SU_1$ and $SU_2$ are located at the edge of the cells where the users $SU_1$ and $SU_2$ are located respectively. Uplink and downlink transmission may be performed between $SU_1$ and $BS_1$, and uplink and downlink transmission may be performed between $SU_2$ and $BS_2$.

In a process of downlink transmission, $BS_1$ transmits a data signal to $SU_1$, and $BS_2$ transmits a data signal to $SU_2$. During the process, since $SU_1$ and $SU_2$ are located at the edge of the cells, $SU_1$ may receive an interfering signal from $BS_2$, and $SU_2$ may receive an interfering signal from $BS_1$. It is assumed that a channel coefficient between $BS_1$ and $SU_1$ is denoted as $h_{1,1}$, and a channel coefficient between $BS_2$ and $SU_2$ is denoted as $h_{2,2}$, a channel coefficient between $BS_1$ and $SU_2$ is denoted as $h_{2,1}$, a channel coefficient between $BS_2$ and $SU_1$ is denoted as $h_{1,2}$, $S_1$ denotes a downlink data signal of $BS_1$, and $S_2$ denotes a downlink data signal of $BS_2$, $y_{SU1}$ denotes a signal received by $SU_1$, and $y_{SU2}$ denotes a signal received by $SU_2$, the following equation can be established:

$$y_{SU_1} = s_1 * \mathrm{h}_{1,1} + s_2 * \mathrm{h}_{1,2} \quad (4)$$

$$y_{SU_2} = s_1 * \mathrm{h}_{2,1} + s_2 * \mathrm{h}_{2,2} \quad (5)$$

In a process of uplink transmission, $SU_1$ transmits a data signal to $BS_1$, and $SU_2$ transmits a data signal to $BS_2$. During the process, since $SU_1$ and $SU_2$ are located at the edge of the cells, $BS_2$ may receive an interfering signal from $SU_1$, and $BS_1$ may receive an interfering signal from $SU_2$. It is assumed that a channel coefficient between $BS_1$ and $SU_1$ is denoted as $h_{1,1}$, and a channel coefficient between $BS_2$ and $SU_2$ is denoted as $h_{2,2}$, a channel coefficient between $BS_1$ and $SU_2$ is denoted as $h_{2,1}$, and a channel coefficient between $BS_2$ and $SU_1$ is denoted as $h_{1,2}$, and $x_1$ denotes an uplink data signal of $SU_1$, and $x_2$ denotes an uplink data signal of $SU_2$, $y_{BS1}$ denotes a signal received by $BS_1$, and $y_{BS2}$ denotes a signal received by $BS_2$, the following equation can be established:

$$y_{BS_1} = x_1 * \mathrm{h}_{1,1} + x_2 * \mathrm{h}_{2,1} \quad (6)$$

$$y_{BS_2} = x_1 * \mathrm{h}_{1,2} + x_2 * \mathrm{h}_{2,2} \quad (7)$$

As similar to the single system, in the wireless communication system having multiple cells (multi-system), if a difference between a data signal and an interfering signal at a receiving end meets a demodulated requirement by reasonably adjusting a parameter such as a waveform parameter or a power adjustment factor at a transmitting end, the same frequency spectrum resource may be used by $SU_1$ and $SU_2$.

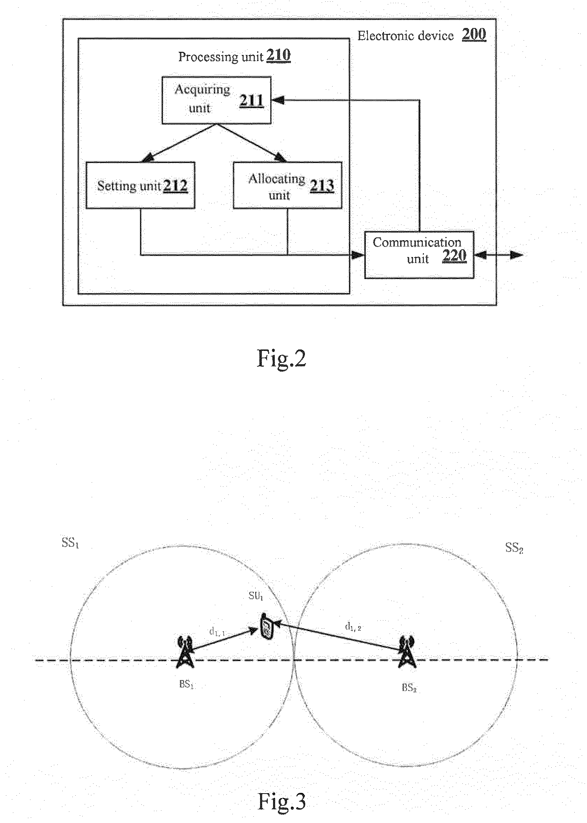

Regarding the above technical problem, a technical solution in the present disclosure is provided. Fig. 2 shows a structure of an electronic device 200 in a wireless communication system according to an embodiment of the present disclosure.

As shown in Fig. 2, the electronic device 200 may include a processing circuit 210. It should be illustrated that the electronic device 200 may include one or more processing circuits 210. In addition, the electronic device 200 may further include a communication unit 220 as a transceiver and the like.

Further, the processing circuit 210 may include various discrete functional units to execute various different functions and/or operations. It should be illustrated that the functional units may be a physical entity or a logical entity, and units with different names may be implemented by the same physical entity.

For example, as shown in Fig. 2, the processing circuit 210 may include an acquiring unit 211, a setting unit 212 and an allocating unit 213.

In the electronic device 200 shown in Fig. 2, the acquiring unit 211 may acquire location information and waveform parameter information of a first user equipment in the wireless communication system where the electronic device is located and frequency spectrum resource information of a second user equipment in the wireless communication system where the electronic device is located.

The setting unit 212 may set waveform parameters based on the location information and the waveform parameter information of the first user equipment.

The allocating unit 213 may allocate a frequency spectrum resource of the second user equipment to the first user equipment, so that the first user equipment uses the frequency spectrum resource of the second user equipment based on the set waveform parameter.

According to the embodiment of the present disclosure, the acquiring unit 211 of the electronic device 200 may acquire the location information of the user equipment using various methods known in the art. For example, in a case that the first user equipment is a new user equipment which accesses into the system for the first time, the first user equipment may actively or passively report location information. In a case that the first user equipment is an existing user equipment in the system, the first user equipment may actively or passively update location information. In addition, the acquiring unit 211 may also acquire the frequency spectrum resource information of the user equipment from the electronic device 200 (for example, a storage unit, not shown) or from other electronic device. Furthermore, the acquiring unit 211 may acquire the above information through the communication unit 220 of the electronic device 200, and transmit the acquired location information of the first user equipment to the setting unit 212, and transmit the acquired frequency spectrum resource information of the second user equipment to the allocating unit 213.

In the embodiment of the present disclosure, the setting unit 212 may acquire the location information of the first user equipment from the acquiring unit 211, and set the waveform parameters according to an algorithm or a rule. Setting the waveform parameters here includes setting the waveform parameter of the first user equipment and setting the waveform parameter of the second user equipment. Furthermore, the setting unit 212 may transmit the set waveform parameters to the communication unit 220 to inform the first user equipment and the second user equipment. According to the embodiment of the present disclosure, with the set waveform parameters, data can be demodulated correctly at the receiving end in a process of data transmission of the first user equipment and the second user equipment. That is, the first user equipment and the second user equipment can demodulate data correctly in downlink transmission, and a base station serving the user equipment can demodulate data correctly in uplink transmission.

In the present disclosure, in a case that the filter bank multicarrier (FBMC) technology is used in the wireless communication system, the waveform parameter may be a filter overlapping factor. It should be understood by those skilled in the art that the waveform parameter may be any one waveform parameter at the transmitting end in the art. In the embodiment of the present disclosure, the acquiring unit 211 of the electronic device 200 may acquires waveform parameter information of the first user equipment and the second user equipment. The waveform parameter information may include a range of a waveform parameter which may be used by the user equipment, for example, a range of the overlapping factor, or may include a waveform parameter which is used by the user equipment currently, for example a value of the overlapping factor, or may further include information on whether the user equipment may adjust the waveform parameter. Here, when the user equipment accesses into the system for the first time, the user equipment may report the waveform parameter information of the user equipment, may report the waveform parameter information of the user equipment along with the location information, or may report the waveform parameter information separately from the location information.

In the embodiment of the present disclosure, the allocating unit 213 may allocate a frequency spectrum resource of the second user equipment to the first user equipment. Here, the allocating unit 213 may transmit the frequency spectrum resource allocated to the first user equipment to the communication unit 220, to inform the first user equipment.

With the electronic device 200 in the present disclosure, different user equipments in the wireless communication system may use the same frequency spectrum resource by setting the waveform parameters, thereby implementing the non-orthogonal frequency spectrum resource sharing and improving the spectrum utilization rate.

It should be noted that, in the embodiment of the present disclosure, the electronic device 200 may be applied into the scenario (the scenario of the single system) shown in Fig. 1(a). That is, the wireless communication system may only have a first cell, and the first user equipment and the second user equipment are both located in the first cell. In the scenario, the electronic device 200 may be a base station of the first cell. In the embodiment of the present disclosure, the electronic device 200 may also be applied into the scenario (i.e. the scenario of multiple systems) shown in Fig. 1(b). That is, the wireless communication system may at least have the first cell and the second cell, and the first user equipment is located in the first cell, and the second user equipment is located in the second cell.

In the embodiment of the present disclosure, the acquiring unit 211 of the processing circuit 210 may also acquire location information of the second user equipment, and set waveform parameters based on the location information and the waveform parameter information of the first user equipment and the location information of the second user equipment.

In the embodiment of the present disclosure, the acquiring unit 211 of the processing unit 210 may also acquire transmission mode information of the first user equipment, and set the waveform parameters based on the location information of the first user equipment and the second user equipment and the transmission mode information of the first user equipment. Here, the transmission mode information of the first user equipment may include uplink transmission and downlink transmission. That is, in a case that the transmission mode information is uplink transmission, it indicates that the first user equipment is to perform uplink transmission. In a case that the transmission mode information is downlink transmission, it indicates that the first user equipment is to perform downlink transmission.

In the embodiment, the acquiring unit 211 of the electronic device 200 may acquire the transmission mode information of the user equipment using various methods known in the art. For example, if the first user equipment is a new user equipment which accesses into the system for the first time, the first user equipment may actively or passively report the transmission mode information. If the first user equipment is the existing user equipment in the system, the first user equipment may actively or passively update the transmission mode information.

In the embodiment of the present disclosure, the allocating unit 213 may allocate a frequency spectrum resource of the second user equipment to the first user equipment, so that the first user equipment uses the frequency spectrum resource of the second user equipment based on the set waveform parameter. Here, the second user equipment has the same transmission mode as the first user equipment. For example, in a case that the transmission mode information of the first user equipment is uplink transmission, the second user equipment which is to perform uplink transmission is selected, and a frequency spectrum resource of the second user equipment is allocated to the first user equipment. In a case that the transmission mode of the first user equipment is downlink transmission, the second user equipment which is to perform downlink transmission is selected, and a frequency spectrum resource of the second user equipment is allocated to the first user equipment.

In the embodiment of the present disclosure, the setting unit 212 of the processing circuit 210 may set power adjustment factors based on the location information of the first user equipment and the second user equipment. The allocating unit 213 of the processing unit 210 acquires frequency spectrum resource information of the second user equipment, and allocates a frequency spectrum resource of the second user equipment to the first user equipment, so that the first user equipment uses the frequency spectrum resource of the second user equipment based on the set waveform parameters and the set power adjustment factor.

In the embodiment, the electronic device 200 not only set the waveform parameters of the user equipment, but also set the power adjustment factors of the user equipment. Here, setting the power adjustment factors includes setting the power adjustment factor of the first user equipment and setting the power adjustment factor of the second user equipment. Furthermore, the setting unit 212 may transmit the set power adjustment factors to the communication unit 220 to inform the first user equipment and the second user equipment. In the embodiment of the present disclosure, with the set power adjustment factors, data can be demodulated correctly at the receiving end in a data transmission process of the first user equipment and the second user equipment. That is, the first user equipment and the second user equipment can both demodulate data correctly in downlink transmission, and the base station serving the user equipment can demodulate data correctly in uplink transmission.

In the embodiment, the setting unit 212 of the electronic device 200 may set demodulation time information of the first user equipment and the second user equipment based on the location information of the first user equipment and the second user equipment, and transmit the demodulation time information of the first user equipment and the second user equipment along with the waveform parameters and/or the power adjustment factors of the first user equipment and the second user equipment to the first user equipment and the second user equipment through the communication unit 220. Here, the demodulation time information includes one time of demodulation and two times of demodulation. The one time of demodulation indicates that a signal demodulated for the first time is a data signal required by the user equipment. The two times of demodulation indicates that a signal demodulated for the first time is an interfering signal, and a signal demodulated for the second time is a data signal required by the user equipment. Upon receiving the demodulation time information, the user equipment may determine whether one time of demodulation or two times of demodulation is required based on the demodulation time information.

The electronic device 200 applied into the scenario of multiple systems is described in detail below.

In the scenario of multiple systems, the wireless communication system at least has a first cell and a second cell, and the first user equipment is located in the first cell, and the second user equipment is located in the second cell.

It should be noted that the wireless communication system in the present disclosure may be a cognitive radio communication system, the first cell may be a first secondary system, the second cell may be a second secondary system, and the electronic device 200 may be a spectrum coordinator in a core network. In the wireless communication system, the user equipment in the first cell may communicate with the spectrum coordinator through the base station in the first cell, and the user equipment in the second cell may communicate with the spectrum coordinator through the base station in the second cell. In the embodiment of the present disclosure, the electronic device 200 may also be a base station in the wireless communication system, for example a base station in the first cell. In this case, the user equipment in the first cell communicates with the electronic device 200 directly, and the user equipment in the second cell communicates with the electronic device 200 through a base station in the second cell.

In the embodiment of the present disclosure, the first user equipment is located a specific region in the first cell. In the specific region, the first user equipment is interfered by the second cell. Here, the specific region in the first cell is a region, and received signal quality of the user equipment in the region does not meet a demodulated requirement. That is, the user equipment in the region is interfered by a user equipment from another cell, and cannot demodulate data correctly. Similarly, there is also a specific region in the second cell, received signal quality of the user equipment in the specific region of the second cell does not meet a demodulated requirement. That is, the user equipment in the region is interfered by a user equipment from another cell (for example, the first cell), and cannot demodulate data correctly. As shown in Fig. 1, the region surrounded with a dashed line is a strong interference region of the cells $SS_1$ and $SS_2$. In this region, the user $SU_1$ is strongly interfered by the cell $SS_2$, and the user $SU_2$ is strongly interfered by the cell $SS_1$. Therefore, in the present disclosure, a region in the first cell located in a region surrounded with a dashed line is defined as a specific region in the first cell, and a region in the second cell located in a region surrounded with a dashed line is defined as a specific region in the second cell.

In the embodiment of the present disclosure, in a case that there is an available idle frequency spectrum in the wireless communication system where the cells $SS_1$ and $SS_2$ are located, the allocating unit 213 allocates the idle frequency spectrum to the first user equipment. In a case that there is no available idle frequency spectrum in the wireless communication system where the cells $SS_1$ and $SS_2$ are located, the electronic device 200 (for example a determining unit not shown) may determine whether the first user equipment is located in the specific region of the first cell. In a case that the first user equipment is not located in the specific region in the first cell, the allocating unit 213 may allocate to the first user equipment a frequency spectrum resource of a third user equipment in the second cell which is located in a region other than the specific region of the second cell and has the same transmission mode information as the first user equipment. This is because in a case that the first user equipment is not located in the specific region in the first cell, it indicates that the first user equipment is far away from the second cell, and the third user equipment in the second cell which is located in the region other than the specific region in the second cell is also far away from the first cell. Therefore, even if the first user equipment and the third user equipment use the same frequency spectrum resource, no great interference is caused since channel attenuation, and a probability of correctly demodulating the data signal at the receiving end is high.

In the embodiment of the present disclosure, in a case that there is no available idle frequency spectrum in the wireless communication system where the cells $SS_1$ and $SS_2$ are located, and the first user equipment is located in the specific region in the first cell, the allocating unit 213 may allocate to the first user equipment a frequency spectrum resource of the second user equipment having the same transmission mode information as the first user equipment. Here, the second user equipment is a user equipment which is located at any location in the second cell and has the same transmission mode information as the first user equipment. The setting unit 212 allocates at least one of the suitable waveform parameter and the suitable power adjustment factor to the first user equipment and the second user equipment, so that the first user equipment and the second user equipment can correctly demodulate a data signal.

In the embodiment of the present disclosure, the processing circuit 220 is further configured to determine whether the first user equipment is located in the specific region of the first cell based on the location information of the first user equipment.

Fig. 3 is a schematic diagram showing a scenario in which a strong interference region is determined according to the embodiment of the present disclosure. With taking downlink transmission of $SU_1$ as an example, it is assumed that a distance between $SU_1$ and $BS_1$ is denoted as $d_{1,1}$, a distance between $SU_1$ and $BS_2$ is denoted as $d_{1,2}$, a channel coefficient between $BS_1$ and $SU_1$ is denoted as $h_{1,1}$, a channel coefficient between $BS_2$ and $SU_1$ is denoted as $h_{1,2}$, $\alpha_1$ denotes a ratio of a channel coefficient for a data signal received by $SU_1$ to a channel coefficient for an interfering signal received by $SU_1$. Only influence of path loss is taken into account, and the channel coefficient is inversely proportional to the distance. Therefore, the following equation is established:

$$\alpha_1 = \frac{h_{1,1}}{h_{1,2}} = \frac{d_{1,2}}{d_{1,1}} \quad (8)$$

where $\alpha_1 \geq 1$, it is assumed that $BS_1$ and $BS_2$ have the same transmission power, and received signal quality $SIR_{SU1}$ of $SU_1$ represented by a signal to interference ratio is as follows:

$$SIR_{SU1} = \frac{(h_{1,1})^2}{(h_{1,2})^2} = \frac{(d_{1,2})^2}{(d_{1,1})^2} = \alpha_1^{\,2} \quad (9)$$

In a case that received signal quality of $SU_1$ does not meet a demodulated requirement, that is, the received signal quality of $SU_1$ is less than a demodulation threshold, it can be determined that $SU_1$ is located in the specific region of the first cell. In a case that SIR of $SU_1$ is less than the demodulation threshold, the following equation is established:

$$SIR_{SU1} = \frac{(h_{1,1})^2}{(h_{1,2})^2} = \frac{(d_{1,2})^2}{(d_{1,1})^2} = \alpha_1^2 < \gamma_1 \quad (10)$$

That is,

$$\alpha_1 < \sqrt{\gamma_1} \quad (11)$$

where $\gamma_1$ is the demodulation threshold of $SU_1$. Different user equipments have different demodulation thresholds. Therefore, in the embodiment of the present disclosure, in a case that the user equipment accesses into the wireless communication system for the first time, the demodulation threshold of the user equipment can be reported. In addition, the user equipment may report the demodulation threshold along with the location information, and may also report the demodulation threshold separately from the location information.

In the embodiment of the present disclosure, the demodulation threshold may be denoted by one or more of a signal to interference ratio (SIR), a signal to interference plus noise ratio (SINR) or a signal noise ratio (SNR). The received signal quality of $SU_1$ is represented with SIR in the equation (9). Therefore, $\gamma_1$ may be a demodulation threshold denoted by SIR, and the situation is similar in a case that the demodulation threshold is denoted by other parameters.

In the embodiment of the present disclosure, in a case that the acquiring unit 211 of the electronic device 200 acquires the location information of the first user equipment, the electronic device 200 (for example, the determining unit, not shown) may determine the distance $d_{1,1}$ between $SU_1$ and $BS_1$ and the distance $d_{1,2}$ between $SU_1$ and $BS_2$, and determine whether $SU_1$ is located in the specific region of the first cell according to the equation (10).

In another embodiment of the present disclosure, when the acquiring unit 211 of the electronic device 200 acquires the location information of the first user equipment, the electronic device 200 (for example, a channel information acquiring unit, not shown) may acquire channel information from a database in the electronic device 200 or in a device other than the electronic device 200. The channel information includes the channel coefficient $h_{1,1}$ between $BS_1$ and $SU_1$ and the channel coefficient $h_{1,2}$ between $BS_2$ and $SU_1$. The electronic device 200 (for example a determining unit, not shown) may determine whether $SU_1$ is located in the specific region of the first cell according to the equation (10).

How the electronic device 200 applied into the scenario of multiple systems sets the waveform parameters and the power adjustment factors of the first user equipment and the second user equipment is described in detail below.

First Embodiment

In a first embodiment, the first user equipment and the second user equipment are located in different cells, and it is assumed that transmission mode information of the first user equipment is downlink transmission.

In the embodiment of the present disclosure, the processing circuit 210 is further configured to acquire channel information based on location information of the first user equipment and the second user equipment, and set power adjustment factors according to a demodulated signal-to-interference-plus-noise ratio requirement or a demodulated signal-noise-ratio requirement of the receiving end based on the channel information.

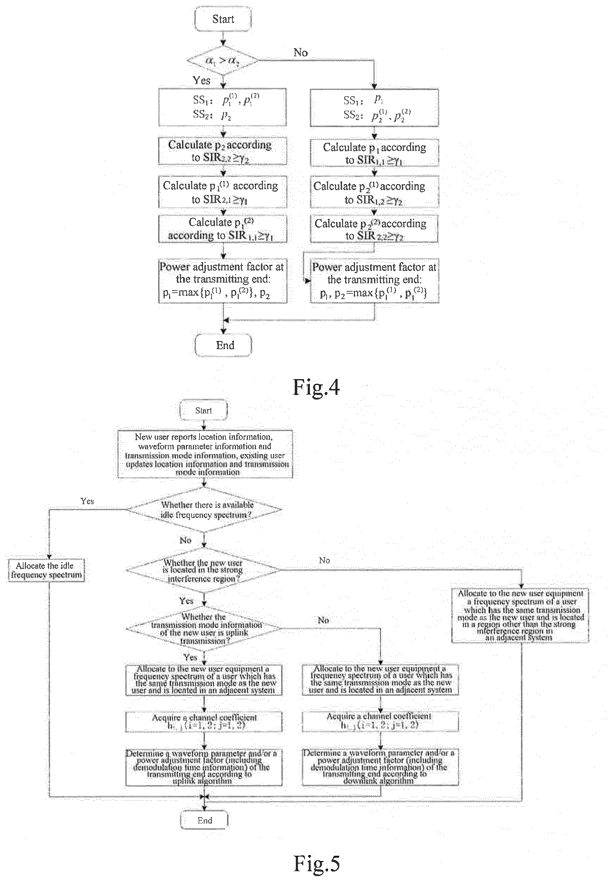

Fig. 4 is a schematic diagram showing a process of configuring a power adjustment factor in the embodiment of the present disclosure.

As shown in Fig. 4, the setting unit 212 calculates $\alpha_1$ and $\alpha_2$ first.

In a case that the location information of the first user equipment and the second user equipment is acquired by the acquiring unit 211 of the electronic device 200, the electronic device 200 (for example, the channel information acquiring unit, not shown) may acquire channel information from a database in the electronic device 200 or in a device other than the electronic device 200. The channel information includes a channel coefficient $h_{1,1}$ between $BS_1$ and $SU_1$, a channel coefficient $h_{2,2}$ between $BS_2$ and $SU_2$, a channel coefficient $h_{2,1}$ between $BS_1$ and $SU_2$ and a channel coefficient $h_{1,2}$ between $BS_2$ and $SU_1$. The setting unit 212 may calculate $\alpha_1$ according to the equation (8), and calculate a ratio $\alpha_2$ of the channel coefficient for a data signal received by $SU_2$ to the channel coefficient for an interfering signal received by $SU_2$ according to the following equation (12).

$$\alpha_2 = \frac{h_{2,2}}{h_{2,1}} = \frac{d_{2,1}}{d_{2,2}} \quad (12)$$

where $\alpha_2 \geq 1$, $d_{2,1}$ denotes a distance between $SU_2$ and $BS_1$, $d_{2,2}$ denotes a distance between $SU_2$ and $BS_2$, $h_{2,1}$ denotes the channel coefficient between $BS_1$ and $SU_2$, $h_{2,2}$ denotes the channel coefficient between $BS_2$ and $SU_2$. Only influence of path loss is taken into account. As similar to the above described process, in a case that $\gamma_2$ denotes a demodulation threshold of $SU_2$, and the following equation is established if SIR of $SU_2$ does not meet the demodulation threshold.

$$\alpha_2 < \sqrt{\gamma_2} \quad (13)$$

The setting unit 212 can compare $\alpha_1$ with $\alpha_2$.

$\alpha_1 > \alpha_2$

In a case of $\alpha_1 > \alpha_2$, it is indicated that $SU_2$ is closer to the center of the strong interference region as compared with $SU_1$. Therefore, interference on $SU_2$ is stronger than interference on $SU_1$. That is, $SU_1$ demodulates the data signal directly, and $SU_2$ demodulates the interfering signal first, and then demodulates the data signal. $SNR_{2,2}$ denotes a signal noise ratio of a data signal received by $SU_2$ from $BS_2$, $p_2$ denotes a power adjustment factor of $SU_2$, $h_{2,2}$ denotes the channel coefficient between $BS_2$ and $SU_2$, $N_0$ denotes white noise, and $\gamma_2$ denotes the demodulation threshold of $SU_2$. The data signal can be modulated correctly only if a signal noise ratio of the data signal received by $SU_2$ is greater than or equal to the demodulation threshold of $SU_2$, and the following equation is established:

$$SNR_{2,2} = \frac{p_2 (h_{2,2})^2}{N_0} \geq \gamma_2 \quad (14)$$

The power adjustment factor $p_2$ of $SU_2$ may be calculated as follows according to the above equation (14).

$$p_2 \geq \frac{\gamma_2 N_0}{(h_{2,2})^2} \quad (15)$$

$SINR_{2,1}$ denotes a signal to interference plus noise ratio of an interfering signal received by $SU_2$ from $BS_1$, $p_1^{(1)}$ denotes a first power adjustment factor of $SU_1$, $h_{2,1}$ denotes the channel coefficient between $BS_1$ and $SU_2$, $h_{2,2}$ denotes the channel coefficient between $BS_2$ and $SU_2$, $N_0$ denotes white noise, $p_2$ denotes the power adjustment factor of $SU_2$ calculated according to the equation (15), and $\gamma_1$ denotes a demodulation threshold of $SU_1$. The data signal can be modulated correctly only if a signal to interference plus noise ratio of the interfering signal received by $SU_2$ is greater than or equal to the demodulation threshold of $SU_1$, and the following equation is established:

$$SINR_{2,1} = \frac{p_1^{(1)} (h_{2,1})^2}{N_0 + p_2 (h_{2,2})^2} \geq \gamma_1 \quad (16)$$

The first power adjustment factor $p_1^{(1)}$ of $SU_1$ may be calculated as follows according to the above equation (16).

$$p_1^{(1)} \geq \frac{\gamma_1 (N_0 + p_2 (h_{2,2})^2)}{(h_{2,1})^2} \quad (17)$$

$SINR_{1,1}$ denotes a signal to interference plus noise ratio of a data signal received by $SU_1$ from $BS_1$, $p_1^{(2)}$ denotes a second power adjustment factor of $SU_1$, $h_{1,2}$ denotes a channel coefficient between $BS_2$ and $SU_1$, $h_{1,1}$ denotes the channel coefficient between $BS_1$ and $SU_1$, $N_0$ denotes white noise, $p_2$ denotes a power adjustment factor of $SU_2$ calculated according to the equation (15), and $\gamma_1$ denotes the demodulation threshold of $SU_1$. The data signal can be modulated correctly only if a signal to interference plus noise ratio of the data signal received by $SU_1$ is greater than or equal to the demodulation threshold of $SU_1$, and the following equation is established:

$$SINR_{1,1} = \frac{p_1^{(2)}(h_{1,1})^2}{N_0 + p_2(h_{1,2})^2} \geq \gamma_1 \quad (18)$$

The second power adjustment factor $p_1^{(2)}$ of $SU_1$ may be calculated as follows according to the above equation (18).

$$p_1^{(2)} \geq \frac{\gamma_1(N_0 + p_2(h_{1,2})^2)}{(h_{1,1})^2} \quad (19)$$

The setting unit 212 sets the power adjustment factor $p_1$ of $SU_1$ as follows based on the first power adjustment factor obtained according to the equation (17) and the second power adjustment factor obtained according to the equation (19).

$$p_1 = \max\{p_1^{(1)}, p_1^{(2)}\} \quad (20)$$

Therefore, in a case of $\alpha_1 > \alpha_2$, the setting unit 212 calculates the power adjustment factor $p_1$ of $SU_1$ through two steps, and calculates the power adjustment factor $p_2$ of $SU_2$ through one step.

$\alpha_1 \leq \alpha_2$

In a case of $\alpha_1 \leq \alpha_2$, it is indicated that $SU_1$ is closer to the center of the strong interference region as compared with $SU_2$. Therefore, interference on $SU_1$ is stronger than interference on $SU_2$. That is, $SU_2$ demodulates the data signal directly, and $SU_1$ demodulates the interfering signal first, and then demodulates the data signal. $SNR_{1,1}$ denotes a signal noise ratio of a data signal received by $SU_1$ from $BS_1$, $p_1$ denotes a power adjustment factor of $SU_1$, $h_{1,1}$ denotes the channel coefficient between $BS_1$ and $SU_1$, $N_0$ denotes white noise, and $\gamma_1$ denotes a demodulation threshold of $SU_1$. The data signal can be modulated correctly only if a signal noise ratio of the data signal received by $SU_1$ is greater than or equal to the demodulation threshold of $SU_1$, and the following equation is established:

$$SNR_{1,1} = \frac{p_1(h_{1,1})^2}{N_0} \geq \gamma_1 \quad (21)$$

The power adjustment factor $p_1$ of $SU_1$ may be calculated as follows according to the above equation (21).

$$p_1 \geq \frac{\gamma_1 N_0}{(h_{1,1})^2} \quad (22)$$

$SINR_{1,2}$ denotes a signal to interference plus noise ratio of an interfering signal received by $SU_1$ from $BS_2$, $p_2^{(1)}$ denotes a first power adjustment factor of $SU_2$, $h_{1,2}$ denotes the channel coefficient between $BS_2$ and $SU_1$, $h_{1,1}$ denotes the channel coefficient between $BS_1$ and $SU_1$, $N_0$ denotes white noise, $p_1$ denotes a power adjustment factor of $SU_1$ calculated according to the equation (22), and $\gamma_2$ denotes a demodulation threshold of $SU_2$. The data signal can be modulated correctly only if a signal to interference plus noise ratio of the interfering signal received by $SU_1$ is greater than or equal to the demodulation threshold of $SU_2$, and the following equation is established:

$$SINR_{1,2} = \frac{p_2^{(1)}(h_{1,2})^2}{N_0 + p_1(h_{1,1})^2} \geq \gamma_2 \quad (23)$$

The first power adjustment factor $p_2^{(1)}$ of $SU_2$ may be calculated as follows according to the above equation (23).

$$p_2^{(1)} \geq \frac{\gamma_2 \left(N_0 + p_1 \left(h_{1,1}\right)^2\right)}{\left(h_{1,2}\right)^2} \quad (24)$$

$SINR_{2,2}$ denotes a signal to interference plus noise ratio of a data signal received by $SU_2$ from $BS_2$, $p_2^{(2)}$ denotes a second power adjustment factor of $SU_2$, $h_{2,1}$ denotes the channel coefficient between $BS_1$ and $SU_2$, $h_{2,2}$ denotes the channel coefficient between $BS_2$ and $SU_2$, $N_0$ denotes white noise, $p_1$ denotes a power adjustment factor of $SU_1$ calculated according to the equation (22), and $\gamma_2$ denotes a demodulation threshold of $SU_2$. The data signal can be modulated correctly only if a signal to interference plus noise ratio of the data signal received by $SU_2$ is greater than or equal to the demodulation threshold of $SU_2$, and the following equation is established:

$$SINR_{2,2} = \frac{p_2^{(2)} \left(h_{2,2}\right)^2}{N_0 + p_1 \left(h_{2,1}\right)^2} \geq \gamma_2 \quad (25)$$

The second power adjustment factor $p_2^{(2)}$ of $SU_2$ may be calculated as follows according to the above equation (25).

$$p_2^{(2)} \geq \frac{\gamma_2 \left(N_0 + p_1 \left(h_{2,1}\right)^2\right)}{\left(h_{2,2}\right)^2} \quad (26)$$

The setting unit 212 sets the power adjustment factor $p_2$ of $SU_2$ as follows based on the first power adjustment factor obtained according to the equation (24) and the second power adjustment factor obtained according to the equation (26).

$$p_2 = \max\left\{p_2^{(1)}, p_2^{(2)}\right\} \quad (27)$$

Therefore, in a case of $\alpha_1 \leq \alpha_2$, the setting unit 212 calculates the power adjustment factor $p_2$ of $SU_2$ through two steps, and calculates the power adjustment factor $p_1$ of $SU_1$ through one step.

In the embodiment of the present disclosure, the processing circuit 210 is further configured to: determine that the set power adjustment factor exceeds an adjustment range of a power amplifier at the transmitting end; reset the power adjustment factor, so that the reset power adjustment factor is in the adjustment range of the power amplifier at the transmitting end; acquire waveform parameter information of the first user equipment and the second user equipment; and set waveform parameters of the first user equipment and the second user equipment, in order that a demodulated signal-to-interference-plus-noise ratio requirement or a demodulated signal-noise-ratio requirement of the receiving end can be met.

The power amplifier at the transmitting end has an adjustment range. After the setting unit 212 calculates the power adjustment factor $p_2$ of $SU_2$ and the power adjustment factor $p_1$ of $SU_1$ based on the described steps, if the power adjustment factor exceeds the adjustment range of the power amplifier at the transmitting end, the power adjustment factor is reset. For example, in a case that the calculated power adjustment factor is less than a minimum power adjustment factor of the power amplifier, the power adjustment factor is reset to the minimum power adjustment factor of the power amplifier. In a case that the calculated power adjustment factor is greater than a maximum power adjustment factor of the power amplifier, the power adjustment factor is reset to the maximum power adjustment factor of the power amplifier.

In the embodiment of the present disclosure, after resetting the power adjustment factor, the setting unit 212 may also set the waveform parameters of the first user equipment and the second user equipment. With taking a filter overlapping factor K as an example, K may be 1, 2, 3 or 4. A minimum transmission signal power is generated in a case of K=1, and a maximum transmission signal power is generated in a case of K=4.

After acquiring the waveform parameter information of the user equipment, the electronic device 200 may set the waveform parameters of the first user equipment and the second user equipment, in order that the demodulated signal-to-interference-plus-noise ratio requirement or the demodulated signal-noise-ratio requirement of the receiving end can be met.

In the embodiment of the present disclosure, in a case of $\alpha_1 > \alpha_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in a range of the overlapping factor of the first user equipment, and sets $K_2$ to a minimum overlapping factor in a range of the overlapping factor of the second user equipment. In a case of $\alpha_1 \leq \alpha_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment.

As described above, the setting unit 212 may set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. For example, in a case of $\alpha_1 \leq \alpha_2$, the demodulation time information of the first user equipment is two times of demodulation, and the demodulation time information of the second user equipment is one time demodulation. In a case of $\alpha_1 > \alpha_2$, the demodulation time information of the first user equipment is one time of demodulation, and the demodulation time information of the second user equipment is two times of demodulation.

As described above, in the first embodiment, in a case that the transmission mode information of the first user equipment is downlink transmission, the setting unit 212 may set the power adjustment factors for the first user equipment and the second user equipment. In a case that the power adjustment factor exceeds the adjustment range of the power amplifier at the transmitting end, the setting unit 212 may set the waveform parameters. In this way, the data signal can be demodulated correctly at the receiving end, thereby implementing non-orthogonal frequency spectrum sharing.

Second Embodiment

In the second embodiment, the first user equipment and the second user equipment are located in different cells, and it is assumed that transmission mode information of the first user equipment is downlink transmission.

In the embodiment of the present disclosure, the processing circuit 210 is further configured to: acquire channel information based on the location information of the first user equipment and the second user equipment; acquire waveform parameter information of the first user equipment and the second user equipment; and set waveform parameters of the first user equipment and the second user equipment based on the channel information and the waveform parameter information, to meet a demodulated signal-to-interference-plus-noise ratio requirement or a demodulated signal-noise-ratio requirement of the receiving end.

In the embodiment of the present disclosure, the setting unit 212 calculates $\alpha_1$ and $\alpha_2$ and compares $\alpha_1$ with $\alpha_2$. The above process is the same as that in the first embodiment, and is not described repeatedly here anymore. That is, the setting unit 212 may calculates $\alpha_1$ according to the equation (8), and calculates $\alpha_2$ according to the equation (12).

In the embodiment of the present disclosure, the electronic device (200) (for example, a waveform parameter information acquiring unit, not shown) may acquire the waveform parameter information of the first user equipment and the second user equipment. The waveform parameter information may include a range of a waveform parameter which may be used by the user equipment, for example, a range of an overlapping factor, may also include a waveform parameter used by the user equipment currently, for example a value of an overlapping factor, may also include information on whether the user equipment may adjust the waveform parameter. After acquiring the waveform parameter information of the user equipment, the electronic device 200 may set the waveform parameters of the first user equipment and the second user equipment, to meet a demodulated signal-to-interference-plus-noise ratio requirement or a demodulated signal-noise-ratio requirement of the receiving end.

In the embodiment of the present disclosure, in a case of $\alpha_1 > \alpha_2$ the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment. In a case of $\alpha_1 \leq \alpha_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment.

In the embodiment of the present disclosure, the processing circuit 210 is further configured to: determine that the set waveform parameter does not meet the demodulated signal-to-interference-plus-noise ratio requirement or the demodulated signal-noise-ratio requirement of the receiving end; and further set a power adjustment factor based on the channel formation, to meet the demodulated signal-to-interference-plus-noise ratio requirement or the demodulated signal-noise-ratio requirement of the receiving end.

As described above, the waveform parameter for example the overlapping factor has a value range. Therefore, the waveform parameter may not meet the demodulated requirement of the receiving end no matter how the waveform parameter is adjusted. The processing circuit 210 (for example, the determining unit, not shown) may be configured to determine whether the set waveform parameter meets the demodulated signal-to-interference-plus-noise ratio requirement or the demodulated signal-noise-ratio requirement of the receiving end after configuring the waveform parameter, and further set the power adjustment factor in a case that the set waveform parameter does not meet the demodulated requirement.

In the present disclosure, a normalized transmission signal power is defined. With taking the overlapping factor as an example, a normalized power corresponding to the transmission signal power generated in a case of the overlapping factor K=1 is 1. Ratios $k_1$, $k_2$ and $k_3$ of transmission signal powers generated in a case that K=2, 3 and 4 to the transmission signal power generated in a case of K=1 serve as normalized transmission signal power in a case of K=2, 3 and 4 respectively. The different overlapping factors and the normalized transmission signal powers corresponding to the overlapping factors are shown in Table 1.

Table 1

| Overlapping factor K | Normalized transmission signal power |
|---|---|
| 1 | 1 |
| 2 | $k_1$ |
| 3 | $k_2$ |
| 4 | $k_3$ |

How to set the power adjustment factor is described below.

$\alpha_1 > \alpha_2$

In a case of $\alpha_1 > \alpha_2$, the overlapping factor $K_1$ of $SU_1$ is greater than the overlapping factor $K_2$ of $SU_2$ as described above, it is assumed $K_1$=4 and $K_2$=1 here.

In a case of $\alpha_1 > \alpha_2$, $SU_2$ is closer to the center of the strong interference region as compared with $SU_1$. Therefore, interference on $SU_2$ is stronger than interference on $SU_1$. That is, $SU_1$ demodulates a data signal directly, and $SU_2$ demodulates an interfering signal first and then demodulates a data signal. $SNR_{2,2}$ denotes a signal noise ratio of a data signal received by $SU_2$ from $BS_2$, $p_2$ denotes a power adjustment factor of $SU_2$, $h_{2,2}$ denotes a channel coefficient between $BS_2$ and $SU_2$, $N_0$ denotes white noise, and $\gamma_2$ denotes a demodulation threshold of $SU_2$. The data signal can be modulated correctly only if a signal noise ratio of the data signal received by $SU_2$ is greater than or equal to the demodulation threshold of $SU_2$, and the following equation is established:

$$SNR_{2,2} = \frac{p_2 (h_{2,2})^2}{N_0} \geq \gamma_2 \quad (28)$$

The power adjustment factor $p_2$ of $SU_2$ may be calculated as follows according to the above equation (28).

$$p_2 \geq \frac{\gamma_2 N_0}{(h_{2,2})^2} \quad (29)$$

$SINR_{2,1}$ denotes a signal to interference plus noise ratio of an interfering signal received by $SU_2$ from $BS_1$, $p_1^{(1)}$ denotes a first power adjustment factor of $SU_1$, $h_{2,1}$ denotes the channel coefficient between $BS_1$ and $SU_2$, $h_{2,2}$ denotes the channel coefficient between $BS_2$ and $SU_2$, $N_0$ denotes white noise, $p_2$ denotes a power adjustment factor of $SU_2$ calculated according to the equation (29), $k_3$ denotes the normalized transmission signal power corresponding to the overlapping factor of $SU_1$, and $\gamma_1$ denotes a demodulation threshold of $SU_1$. The data signal can be modulated correctly only if a signal to interference plus noise ratio of the interfering signal received by $SU_2$ is greater than or equal to the demodulation threshold of $SU_1$, and the following equation is established:

$$SINR_{2,1} = \frac{p_1^{(1)} k_3 (h_{2,1})^2}{N_0 + p_2 (h_{2,2})^2} \geq \gamma_1 \quad (30)$$

The first power adjustment factor $p_1^{(1)}$ of $SU_1$ may be calculated as follows according to the above equation (30).

$$p_1^{(1)} \geq \frac{\gamma_1 (N_0 + p_2 (h_{2,2})^2)}{k_3 (h_{2,1})^2} \quad (31)$$

$SINR_{1,1}$ denotes a signal to interference plus noise ratio of a data signal received by $SU_1$ from $BS_1$, $p_1^{(2)}$ denotes a second power adjustment factor of $SU_1$, $h_{1,2}$ denotes the channel coefficient between $BS_2$ and $SU_1$, $h_{1,1}$ denotes the channel coefficient between $BS_1$ and $SU_1$, $N_0$ denotes white noise, $p_2$ denotes a power adjustment factor of $SU_2$ calculated according to the equation (29), $k_3$ denotes the normalized transmission signal power corresponding to the overlapping factor of $SU_1$, and $\gamma_1$ denotes a demodulation threshold of $SU_1$. The data signal can be modulated correctly only if a signal to interference plus noise ratio of the data signal received by $SU_1$ is greater than or equal to the demodulation threshold of $SU_1$, and the following equation is established:

$$SINR_{1,1} = \frac{p_1^{(2)} k_3 (h_{1,1})^2}{N_0 + p_2 (h_{1,2})^2} \geq \gamma_1 \quad (32)$$

The second power adjustment factor $p_1^{(2)}$ of $SU_1$ may be calculated as follows according to the above equation (32).

$$p_1^{(2)} \geq \frac{\gamma_1 (N_0 + p_2 (h_{1,2})^2)}{k_3 (h_{1,1})^2} \quad (33)$$

The setting unit 212 sets the power adjustment factor $p_1$ of $SU_1$ as follows based on the first power adjustment factor obtained according to the equation (31) and the second power adjustment factor obtained according to the equation (33).

$$p_1 = \max \{ p_1^{(1)}, p_1^{(2)} \} \quad (34)$$

Therefore, in a case of $\alpha_1 > \alpha_2$, the setting unit 212 calculates the power adjustment factor $p_1$ of $SU_1$ through two steps, and calculates the power adjustment factor $p_2$ of $SU_2$ through one step.

$\alpha_1 \leq \alpha_2$

In a case of $\alpha_1 \leq \alpha_2$, the overlapping factor $K_1$ of $SU_1$ is less than the overlapping factor $K_2$ of $SU_2$ as described above, and it is assumed $K_1 = 1$ and $K_2 = 4$ here.
In a case of $\alpha_1 \leq \alpha_2$, $SU_1$ is closer to the center of the strong interference region as compared with $SU_2$. Therefore, interference on $SU_1$ is stronger than interference on $SU_2$. That is, $SU_2$ demodulates the data signal directly, and $SU_1$ demodulates the interfering signal first and then demodulates the data signal. $SNR_{1,1}$ denotes a signal noise ratio of a data signal received by $SU_1$ from $BS_1$, $p_1$ denotes a power adjustment factor of $SU_1$, $h_{1,1}$ denotes a channel coefficient between $BS_1$ and $SU_1$, $N_0$ denotes white noise, and $\gamma_1$ denotes a demodulation threshold of $SU_1$. The data signal can be modulated correctly only if a signal noise ratio of the data signal received by $SU_1$ is greater than or equal to the demodulation threshold of $SU_1$, and the following equation is established:

$$SNR_{1,1} = \frac{p_1 (h_{1,1})^2}{N_0} \geq \gamma_1 \quad (35)$$

the power adjustment factor $p_1$ of $SU_1$ may be calculated as follows according to the above equation (35).

$$p_1 \geq \frac{\gamma_1 N_0}{(h_{1,1})^2} \quad (36)$$

$SINR_{1,2}$ denotes a signal to interference plus noise ratio of an interfering signal received by $SU_1$ from $BS_2$, $p_2^{(1)}$ denotes a first power adjustment factor of $SU_2$, $h_{1,2}$ denotes a channel coefficient between $BS_2$ and $SU_1$, $h_{1,1}$ denotes a channel coefficient between $BS_1$ and $SU_1$, $N_0$ denotes white noise, $p_1$ denotes a power adjustment factor of $SU_1$ calculated according to the equation (36), $k_3$ denotes a normalized transmission power corresponding to the overlapping factor of $SU_2$, and $\gamma_2$ denotes a demodulation threshold of $SU_2$. The data signal can be modulated correctly only if a signal to interference plus noise ratio of the interfering signal received by $SU_1$ is greater than or equal to the demodulation threshold of $SU_2$, and the following equation is established:

$$SINR_{1,2} = \frac{p_2^{(1)} k_3 (h_{1,2})^2}{N_0 + p_1 (h_{1,1})^2} \geq \gamma_2 \quad (37)$$

The first power adjustment factor $p_2^{(1)}$ of $SU_2$ may be calculated as follows according to the above equation (37).

$$p_2^{(1)} \geq \frac{\gamma_2 (N_0 + p_1 (h_{1,1})^2)}{k_3 (h_{1,2})^2} \quad (38)$$

$SINR_{2,2}$ denotes a signal to interference plus noise ratio of a data signal received by $SU_2$ from $BS_2$, $p_2^{(2)}$ denotes a second power adjustment factor of $SU_2$, $h_{2,1}$ denotes a channel coefficient between $BS_1$ and $SU_2$, $h_{2,2}$ denotes a channel coefficient between $BS_2$ and $SU_2$, $N_0$ denotes white noise, $p_1$ denotes a power adjustment factor of $SU_1$ calculated according to the equation (36), $k_3$ denotes a normalized transmission power corresponding to the overlapping factor of $SU_2$, and $\gamma_2$ denotes a demodulation threshold of $SU_2$. The data signal can be modulated correctly only if a signal to interference plus noise ratio of the data signal received by $SU_2$ is greater than or equal to the demodulation threshold of $SU_2$, and the following equation is established:

$$SINR_{2,2} = \frac{p_2^{(2)} k_3 (h_{2,2})^2}{N_0 + p_1 (h_{2,1})^2} \geq \gamma_2 \quad (39)$$

The second power adjustment factor $p_2^{(2)}$ of $SU_2$ may be calculated as follows according to the above equation (39).

$$p_2^{(2)} \geq \frac{\gamma_2 (N_0 + p_1 (h_{2,1})^2)}{k_3 (h_{2,2})^2} \quad (40)$$

The setting unit 212 then sets the power adjustment factor $p_2$ of $SU_2$ as follows based on the first power adjustment factor obtained according to the equation (38) and the second power adjustment factor obtained according to the equation (40).

$$p_2 = \max\{p_2^{(1)}, p_2^{(2)}\} \tag{41}$$

Therefore, in a case of $\alpha_1 \le \alpha_2$, the setting unit 212 calculates the power adjustment factor $p_2$ of $SU_2$ through two steps, and calculates the power adjustment factor $p_1$ of $SU_1$ through one step.

In the embodiment of the present disclosure, the setting unit 212 may set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to the process in the first embodiment, which is not described repeatedly here anymore.

As described above, in the second embodiment, in a case that the transmission mode information of the first user equipment is downlink transmission, the setting unit 212 may set waveform parameters for the first user equipment and the second user equipment, and set the power adjustment factors in a case that the waveform parameter does not meet the demodulated requirement of the receiving end. In this way, the data signal can be demodulated correctly at the receiving end, thereby implementing non-orthogonal frequency spectrum sharing.

Third Embodiment

In the third embodiment, the first user equipment and the second user equipment are located in difference cells, and it is assumed that transmission mode information of the first user equipment is uplink transmission.

In the embodiment of the present disclosure, the processing circuit 210 is further configured to acquire channel information based on the location information of the first user equipment and the second user equipment, and set a power adjustment factor based on the channel information according to a demodulated signal-to-interference-plus-noise ratio requirement or a demodulated signal-noise-ratio requirement of the receiving end.

In a case that the location information of the first user equipment and the second user equipment are acquired by the acquiring unit 211 of the electronic device 200, the electronic device 200 (for example, a channel information acquiring unit, not shown) may acquire channel information from a database in the electronic device 200 or in a device other than the electronic device 200. The channel information includes a channel coefficient $h_{1,1}$ between $BS_1$ and $SU_1$, a channel coefficient $h_{2,2}$ between $BS_2$ and $SU_2$, a channel coefficient $h_{2,1}$ between $BS_1$ and $SU_2$ and a channel coefficient $h_{1,2}$ between $BS_2$ and $SU_1$.

As described above, $\alpha_1$ denotes a ratio of a channel coefficient of a data signal received by $SU_1$ to a channel coefficient of an interfering signal received by $SU_1$, and $\alpha_2$ denotes a ratio of a channel coefficient of a data signal received by $SU_2$ to a channel coefficient of an interfering signal received by $SU_2$. Similarly, $\beta_1$ denotes a ratio of a channel coefficient of a data signal (that is, a signal from $SU_1$) received by $BS_1$ to a channel coefficient of an interfering signal (that is, a signal from $SU_2$) received by $BS_1$, $P_2$ denotes a ratio of a channel coefficient of a data signal (that is, a signal from $SU_2$) received by $BS_2$ to a channel coefficient of an interfering signal (that is, a signal from $SU_1$) received by $BS_2$. Only path loss is taken into account here.

The setting unit 212 may calculate $\beta_1$ and $\beta_2$ according to the following equation. $\gamma_1$ denotes a demodulation threshold of $SU_1$, and $\gamma_2$ denotes a demodulation threshold of $SU_2$.

$$\beta_1 = \frac{h_{1,1}}{h_{2,1}}(1 \le \beta_1 < \sqrt{\gamma_1}) \tag{42}$$

$$\beta_2 = \frac{h_{2,2}}{h_{1,2}}(1 \le \beta_2 < \sqrt{\gamma_2}) \tag{43}$$

$\beta_1$ may be compared with $\beta_2$.

$\beta_1 > \beta_2$

In a case of $\beta_1 > \beta_2$, $BS_1$ directly demodulates the signal of $SU_1$, $BS_2$ first demodulates the signal of $SU_1$ and

then demodulates the signal of $SU_2$. $SNR_{2,2}$ denotes a signal noise ratio of a data signal received by $BS_2$ from $SU_2$, $p_2$ denotes a power adjustment factor of $SU_2$, $h_{2,2}$ denotes the channel coefficient between $BS_2$ and $SU_2$, $N_0$ denotes white noise, and $\gamma_2$ denotes the demodulation threshold of $SU_2$. The data signal can be modulated correctly only if a signal noise ratio of the data signal received by $BS_2$ from $SU_2$ is greater than or equal to the demodulation threshold of $SU_2$, and the following equation is established:

$$SNR_{2,2} = \frac{p_2 \left(h_{2,2}\right)^2}{N_0} \geq \gamma_2 \quad (44)$$

The power adjustment factor $p_2$ of $SU_2$ may be calculated as follows according to the above equation (44).

$$p_2 \geq \frac{\gamma_2 N_0}{\left(h_{2,2}\right)^2} \quad (45)$$

$SINR_{1,2}$ denotes a signal to interference plus noise ratio of an interfering signal received by $BS_2$ from $SU_1$, $p_1^{(1)}$ denotes a first power adjustment factor of $SU_1$, $h_{1,2}$ denotes the channel coefficient between $BS_2$ and $SU_1$, $h_{2,2}$ denotes the channel coefficient between $BS_2$ and $SU_2$, $N_0$ denotes white noise, $p_2$ denotes a power adjustment factor of $SU_2$ calculated according to the equation (45), and $\gamma_1$ denotes the demodulation threshold of $SU_1$, the data signal can be modulated correctly only if a signal to interference plus noise ratio of the interfering signal received by $BS_2$ from $SU_1$ is greater than or equal to the demodulation threshold of $SU_1$, the following equation is established:

$$SINR_{1,2} = \frac{p_1^{(1)} \left(h_{1,2}\right)^2}{N_0 + p_2 \left(h_{2,2}\right)^2} \geq \gamma_1 \quad (46)$$

The first power adjustment factor $p_1^{(1)}$ of $SU_1$ may be calculated as follows according to the above equation (46).

$$p_1^{(1)} \geq \frac{\gamma_1 \left(N_0 + p_2 \left(h_{2,2}\right)^2\right)}{\left(h_{1,2}\right)^2} \quad (47)$$

$SINR_{1,1}$ denotes a signal to interference plus noise ratio of a data signal received by $BS_1$ from $SU_1$, $p_1^{(2)}$ denotes a second power adjustment factor of $SU_1$, $h_{2,1}$ denotes the channel coefficient between $BS_1$ and $SU_2$, $h_{1,1}$ denotes the channel coefficient between $BS_1$ and $SU_1$, $N_0$ denotes white noise, $p_2$ denotes a power adjustment factor of $SU_2$ calculated according to the equation (45), and $\gamma_1$ denotes a demodulation threshold of $SU_1$. The data signal can be modulated correctly only if a signal to interference plus noise ratio of the data signal received by $BS_1$ from $SU_1$ is greater than or equal to the demodulation threshold of $SU_1$, and the following equation is obtained:

$$SINR_{1,1} = \frac{p_1^{(2)} \left(h_{1,1}\right)^2}{N_0 + p_2 \left(h_{2,1}\right)^2} \geq \gamma_1 \quad (48)$$

The second power adjustment factor $p_1^{(2)}$ of $SU_1$ may be calculated as follows according to the above equation (48).

$$p_1^{(2)} \geq \frac{\gamma_1 \left(N_0 + p_2 \left(h_{2,1}\right)^2\right)}{\left(h_{1,1}\right)^2} \quad (49)$$

The setting unit 212 sets the power adjustment factor $p_1$ of $SU_1$ as follows based on the first power adjustment factor obtained according to the equation (47) and the second power adjustment factor obtained according to the equation (49).

$$p_1 = \max\{p_1^{(1)}, p_1^{(2)}\} \tag{50}$$

Therefore, in a case of $\beta_1 > \beta_2$, the setting unit 212 calculates the power adjustment factor $p_1$ of $SU_1$ through two steps, and calculates the power adjustment factor $p_2$ of $SU_2$ through one step.

$\beta_1 \leq \beta_2$

In a case of $\beta_1 \leq \beta_2$, $BS_2$ directly demodulate the data signal, and $BS_1$ demodulate the signal of $SU_2$ first and then demodulate the signal of $SU_1$. $SNR_{1,1}$ denotes a signal noise ratio of a data signal received by $BS_1$ from $SU_1$, $p_1$ denotes a power adjustment factor of $SU_1$, $h_{1,1}$ denotes the channel coefficient between $BS_1$ and $SU_1$, $N_0$ denotes white noise, and $\gamma_1$ denotes a demodulation threshold of $SU_1$. The data signal can be modulated correctly only if a signal noise ratio of the data signal received by $BS_1$ from $SU_1$ is greater than or equal to the demodulation threshold of $SU_1$, and the following equation is established:

$$SNR_{1,1} = \frac{p_1(h_{1,1})^2}{N_0} \geq \gamma_1 \tag{51}$$

The power adjustment factor $p_1$ of $SU_1$ may be calculated as follows according to the above equation (51).

$$p_1 \geq \frac{\gamma_1 N_0}{(h_{1,1})^2} \tag{52}$$

$SINR_{2,1}$ denotes a signal to interference plus noise ratio of an interfering signal received by $BS_1$ from $SU_2$, $p_2^{(1)}$ denotes a first power adjustment factor of $SU_2$, $h_{2,1}$ denotes the channel coefficient between $BS_1$ and $SU_2$, $h_{1,1}$ denotes the channel coefficient between $BS_1$ and $SU_1$, $N_0$ denotes white noise, $p_1$ denotes a power adjustment factor of $SU_1$ calculated according to the equation (52), and $\gamma_2$ denotes the demodulation threshold of $SU_2$. The data signal can be modulated correctly only if a signal to interference plus noise ratio of the interfering signal received by $BS_1$ from $SU_2$ is greater than or equal to the demodulation threshold of $SU_2$, and the following equation is obtained:

$$SINR_{2,1} = \frac{p_2^{(1)}(h_{2,1})^2}{N_0 + p_1(h_{1,1})^2} \geq \gamma_2 \tag{53}$$

The first power adjustment factor $p_2^{(1)}$ of $SU_2$ may be calculated as follows according to the above equation (53).

$$p_2^{(1)} \geq \frac{\gamma_2\left(N_0 + p_1(h_{1,1})^2\right)}{(h_{2,1})^2} \tag{54}$$

$SINR_{2,2}$ denotes a signal to interference plus noise ratio of a data signal received by $BS_2$ from $SU_2$, $p_2^{(2)}$ denotes a second power adjustment factor of $SU_2$, $h_{1,2}$ denotes the channel coefficient between $BS_2$ and $SU_1$, $h_{2,2}$ denotes the channel coefficient between $BS_2$ and $SU_2$, $N_0$ denotes white noise, $p_1$ denotes a power adjustment factor of $SU_1$ calculated according to the equation (52), and $\gamma_2$ denotes the demodulation threshold of $SU_2$. The data signal can be modulated correctly only if a signal to interference plus noise ratio of the data signal received by $BS_2$ from $SU_2$ is greater than or equal to the demodulation threshold of $SU_2$, and the following equation is obtained:

$$SINR_{2,2} = \frac{p_2^{(2)}\left(h_{2,2}\right)^2}{N_0 + p_1\left(h_{1,2}\right)^2} \geq \gamma_2 \quad (55)$$

The second power adjustment factor $p_2^{(2)}$ of $SU_2$ may be calculated as follows according to the above equation (55).

$$p_2^{(2)} \geq \frac{\gamma_2\left(N_0 + p_1\left(h_{1,2}\right)^2\right)}{\left(h_{2,2}\right)^2} \quad (56)$$

The setting unit 212 then sets the power adjustment factor $p_2$ of $SU_2$ as follows based on the first power adjustment factor obtained according to the equation (54) and the second power adjustment factor obtained according to the equation (56).

$$p_2 = \max\{p_2^{(1)}, p_2^{(2)}\} \quad (57)$$

Therefore, in a case of $\beta_1 \leq \beta_2$, the setting unit 212 calculates the power adjustment factor $p_2$ of $SU_2$ through two steps, and calculates the power adjustment factor $p_1$ of $SU_1$ through one step.

In the embodiment of the present disclosure, the processing circuit 210 is further configured to: determine that the set power adjustment factor exceeds an adjustment range of a power amplifier at the transmitting end; reset the power adjustment factor, so that the reset power adjustment factor is in the adjustment range of the power amplifier at the transmitting end; acquire waveform parameter information of the first user equipment and the second user equipment; and set waveform parameters of the first user equipment and the second user equipment, in order that a demodulated signal-to-interference-plus-noise ratio requirement or a demodulated signal-noise-ratio requirement of the receiving end can be met.

The power amplifier at the transmitting end has an adjustment range. After the setting unit 212 calculates the power adjustment factor $p_2$ of $SU_2$ and the power adjustment factor $p_1$ of $SU_1$ with the described steps, if the power adjustment factor exceeds the adjustment range of the power amplifier at the transmitting end, the power adjustment factor is reset. For example, in a case that the calculated power adjustment factor is less than a minimum power adjustment factor of the power amplifier, the power adjustment factor is reset to the minimum power adjustment factor of the power amplifier. In a case that the calculated power adjustment factor is greater than a maximum power adjustment factor of the power amplifier, the power adjustment factor is reset to the maximum power adjustment factor of the power amplifier.

In the embodiment of the present disclosure, after resetting the power adjustment factors, the setting unit 212 may also set the waveform parameters of the first user equipment and the second user equipment. With taking the filter overlapping factor K as an example, K may be 1, 2, 3 or 4. A minimum transmission signal power is generated in a case of K=1, and, a maximum transmission signal power is generated in a case of K=4.

In the embodiment of the present disclosure, the electronic device 200 (for example, a waveform parameter information acquiring unit, not shown) may acquire waveform parameter information of the first user equipment and the second user equipment. The waveform parameter information may include a range of a waveform parameter which may be used by the user equipment, for example, a range of an overlapping factor, may also include a waveform parameter used by the user equipment currently, for example a value of an overlapping factor, may also include information on whether the user equipment may adjust the waveform parameter. Here, the waveform parameter information of the user equipment may be reported when the user equipment accesses into the system for the first time, or the waveform parameter information may be reported along with the location information, or the waveform parameter information may be reported separately from the location information. After acquiring the waveform parameter information of the user equipment, the electronic device 20 may set waveform parameters of the first user equipment and the second user equipment, in order that the demodulated signal-to-interference-plus-noise ratio requirement or the demodulated signal-noise-ratio requirement of the receiving end can be met.

In the embodiment of the present disclosure, in a case of $\beta_1 > \beta_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment. In a

case of $\beta_1 \leq \beta_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment.

In the embodiment of the present disclosure, the setting unit 212 may set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to the process in the first embodiment, which is not described repeatedly here anymore.

As described above, in the third embodiment, in a case that the transmission mode information of the first user equipment is uplink transmission, the setting unit 212 may set power adjustment factors for the first user equipment and the second user equipment, and set waveform parameters in a case that the power adjustment factor exceeds the adjustment range of the power amplifier at the transmitting end. In this way, the data signal can be demodulated correctly at the receiving end, thereby implementing non-orthogonal frequency spectrum sharing.

Fourth Embodiment

In the fourth embodiment, the first user equipment and the second user equipment are located in different cells, and it is assumed that transmission mode information of the first user equipment is uplink transmission.

In the embodiment of the present disclosure, the processing circuit 210 is further configured to acquire channel information based on location information of the first user equipment and the second user equipment, acquire waveform parameter information of the first user equipment and the second user equipment, and set waveform parameters of the first user equipment and the second user equipment based on the channel information and the waveform parameter information, to meet a demodulated signal-to-interference-plus-noise ratio requirement or a demodulated signal-noise-ratio requirement of the receiving end.

In the embodiment of the present disclosure, the setting unit 212 calculates $\beta_1$ and $\beta_2$ and compares $\beta_1$ with $\beta_2$. The above process is the same as the process in the third embodiment, and is not described repeatedly here anymore. That is, the setting unit 212 may calculate $\beta_1$ according to the equation (42), and calculates $\beta_2$ according to the equation (43).

In the embodiment of the present disclosure, the electronic device 200 (for example, a waveform parameter information acquiring unit, not shown) may acquire waveform parameter information of the first user equipment and the second user equipment. The waveform parameter information may include a range of a waveform parameter which may be used by the user equipment, for example, a range of an overlapping factor, may also include a waveform parameter which is used by the user equipment currently, for example a value of the overlapping factor, may also include information on whether the user equipment may adjust the waveform parameter. After acquiring the waveform parameter information of the user equipment, the electronic device 200 may set the waveform parameters of the first user equipment and the second user equipment, to meet a demodulated signal-to-interference-plus-noise ratio requirement or a demodulated signal-noise-ratio requirement of the receiving end.

In the embodiment of the present disclosure, in a case of $\beta_1 > \beta_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment. In a case of $\beta_1 \leq \beta_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment.

In the embodiment of the present disclosure, the processing circuit 210 is further configured to determine that the set waveform parameter does not meet the demodulated signal-to-interference-plus-noise ratio requirement or the demodulated signal-noise-ratio requirement of the receiving end, and further set power adjustment factors based on the channel information, to meet the demodulated signal-to-interference-plus-noise ratio requirement or the demodulated signal-noise-ratio requirement of the receiving end.

As described above, the waveform parameter for example the overlapping factor has a value range. Therefore, the waveform parameter may not meet the demodulated requirement of the receiving end no matter how the waveform parameter is adjusted. The processing circuit 210 (for example, the determining unit, not shown) may be configured to determine whether the set waveform parameter meets the demodulated signal-to-interference-plus-noise ratio requirement or the demodulated signal-noise-ratio requirement of the receiving end after configuring the waveform parameter, and further set the power adjustment factors in a case that the set waveform parameter does not meet the demodulated requirement. A normalized transmission signal power may be defined here. For example, a ratio $k_3$ of a transmission signal power generated in a case of K=4 to a transmission signal power generated in a case of K=1 is defined as a normalized transmission signal power in a case of K=4, which is the same as that of the second embodiment, and is not described repeatedly here anymore.

How to set the power adjustment factor is described below.

$\beta_1 > \beta_2$

In a case of $\beta_1 > \beta_2$, the overlapping factor $K_1$ of $SU_1$ is greater than the overlapping factor $K_2$ of $SU_2$ as described above, it is assumed $K_1=4$ and $K_2=1$ here.

In a case of $\beta_1 > \beta_2$, $BS_1$ demodulates a signal of $SU_1$ directly, and $BS_2$ demodulates the signal of $SU_1$ first and then demodulates a signal of $SU_2$. $SNR_{2,2}$ denotes a signal noise ratio of a data signal received by $BS_2$ from $SU_2$, $p_2$ denotes a power adjustment factor of $SU_2$, $h_{2,2}$ denotes the channel coefficient between $BS_2$ and $SU_2$, $N_0$ denotes white noise, and $\gamma_2$ denotes a demodulation threshold of $SU_2$. The data signal can be modulated correctly only if a signal noise ratio of the data signal received by $BS_2$ from $SU_2$ is greater than or equal to the demodulation threshold of $BS_2$, and the following equation is established:

$$SNR_{2,2} = \frac{p_2 \left(h_{2,2}\right)^2}{N_0} \geq \gamma_2 \quad (58)$$

The power adjustment factor $p_2$ of $SU_2$ may be calculated as follows according to the above equation (58).

$$p_2 \geq \frac{\gamma_2 N_0}{\left(h_{2,2}\right)^2} \quad (59)$$

$SINR_{1,2}$ denotes a signal to interference plus noise ratio of an interfering signal received by $BS_2$ from $SU_1$, $p_1^{(1)}$ denotes a first power adjustment factor of $SU_1$, $h_{1,2}$ denotes the channel coefficient between $BS_2$ and $SU_1$, $h_{2,2}$ denotes the channel coefficient between $BS_2$ and $SU_2$, $N_0$ denotes white noise, $p_2$ denotes a power adjustment factor of $SU_2$ calculated according to the equation (59), $\gamma_1$ denotes a demodulation threshold of $SU_1$, and $k_3$ denotes the normalized transmission signal power in a case of K=4. The data signal can be modulated correctly only if a signal to interference plus noise ratio of the interfering signal received by $BS_2$ from $SU_1$ is greater than or equal to the demodulation threshold of $SU_1$, and the following equation is established:

$$SINR_{1,2} = \frac{p_1^{(1)} k_3 \left(h_{1,2}\right)^2}{N_0 + p_2 \left(h_{2,2}\right)^2} \geq \gamma_1 \quad (60)$$

The first power adjustment factor $p_1^{(1)}$ of $SU_1$ may be calculated as follows according to the above equation (60).

$$p_1^{(1)} \geq \frac{\gamma_1 \left(N_0 + p_2 \left(h_{2,2}\right)^2\right)}{k_3 \left(h_{1,2}\right)^2} \quad (61)$$

$SINR_{1,1}$ denotes a signal to interference plus noise ratio of a data signal received by $BS_1$ from $SU_1$, $p_1^{(2)}$ denotes a second power adjustment factor of $SU_1$, $h_{2,1}$ denotes the channel coefficient between $BS_1$ and $SU_2$, $h_{1,1}$ denotes the channel coefficient between $BS_1$ and $SU_1$, $N_0$ denotes white noise, $p_2$ denotes a power adjustment factor of $SU_2$ calculated according to the equation (59), $\gamma_1$ denotes a demodulation threshold of $SU_1$, and $k_3$ denotes the normalized transmission signal power in a case of K=4. The data signal can be modulated correctly only if a signal to interference plus noise ratio of the data signal received by $BS_1$ from $SU_1$ is greater than or equal to the demodulation threshold of $SU_1$, and the following equation is established:

$$SINR_{1,1} = \frac{p_1^{(2)} k_3 (h_{1,1})^2}{N_0 + p_2 (h_{2,1})^2} \geq \gamma_1 \quad (62)$$

The second power adjustment factor $p_1^{(2)}$ of $SU_1$ may be calculated as follows according to the above equation (62).

$$p_1^{(2)} \geq \frac{\gamma_1 (N_0 + p_2 (h_{2,1})^2)}{k_3 (h_{1,1})^2} \quad (63)$$

The setting unit 212 sets the power adjustment factor $p_1$ of $SU_1$ as follows based on the first power adjustment factor obtained according to the equation (61) and the second power adjustment factor obtained according to the equation (63).

$$p_1 = \max \{ p_1^{(1)}, p_1^{(2)} \} \quad (64)$$

Therefore, in a case of $\beta_1 > \beta_2$, the setting unit 212 calculates the power adjustment factor $p_1$ of $SU_1$ through two steps, and calculates the power adjustment factor $p_2$ of $SU_2$ through one step.

$\beta_1 \leq \beta_2$

In a case of $\beta_1 \leq \beta_2$, the overlapping factor $K_1$ of $SU_1$ is less than the overlapping factor $K_2$ of $SU_2$ as described above, and it is assumed $K_1 = 1$ and $K_2 = 4$ here.

In a case of $\beta_1 \leq \beta_2$, $BS_2$ demodulates a data signal directly, and $BS_1$ demodulates a signal of $SU_2$ first and then demodulates a signal of $SU_1$. $SNR_{1,1}$ denotes a signal noise ratio of a data signal received by $BS_1$ from $SU_1$, $p_1$ denotes a power adjustment factor of $SU_1$, $h_{1,1}$ denotes the channel coefficient between $BS_1$ and $SU_1$, $N_0$ denotes white noise, and $\gamma_1$ denotes a demodulation threshold of $SU_1$. The data signal can be modulated correctly only if a signal noise ratio of the data signal received by $BS_1$ from $SU_1$ is greater than or equal to the demodulation threshold of $SU_1$, and the following equation is established:

$$SNR_{1,1} = \frac{p_1 (h_{1,1})^2}{N_0} \geq \gamma_1 \quad (65)$$

The power adjustment factor $p_1$ of $SU_1$ may be calculated as follows according to the above equation (65).

$$p_2 \geq \frac{\gamma_2 N_0}{(h_{2,2})^2} \quad (66)$$

$SINR_{2,1}$ denotes a signal to interference plus noise ratio of an interfering signal received by $BS_1$ from $SU_2$, $p_2^{(1)}$ denotes a first power adjustment factor of $SU_2$, $h_{2,1}$ denotes the channel coefficient between $BS_1$ and $SU_2$, $h_{1,1}$ denotes the channel coefficient between $BS_1$ and $SU_1$, $N_0$ denotes white noise, $p_1$ denotes a power adjustment factor of $SU_1$ calculated according to the equation (66), $\gamma_2$ denotes a demodulation threshold of $SU_2$, and $k_3$ denotes the normalized transmission signal power in a case of $K = 4$. The data signal can be modulated correctly only if a signal to interference plus noise ratio of the interfering signal received by $BS_1$ from $SU_2$ is greater than or equal to the demodulation threshold of $SU_2$, the following equation is established:

$$SINR_{2,1} = \frac{p_2^{(1)} k_3 (h_{2,1})^2}{N_0 + p_1 (h_{1,1})^2} \geq \gamma_2 \quad (67)$$

The first power adjustment factor $p_2^{(1)}$ of $SU_2$ may be calculated as follows according to the above equation (67).

$$p_2^{(1)} \geq \frac{\gamma_2 \left( N_0 + p_1 \left( h_{1,1} \right)^2 \right)}{k_3 \left( h_{2,1} \right)^2} \quad (68)$$

$SINR_{2,2}$ denotes a signal to interference plus noise ratio of a data signal received by $BS_2$ from $SU_2$, $p_2^{(2)}$ denotes a second power adjustment factor of $SU_2$, $h_{1,2}$ denotes the channel coefficient between $BS_2$ and $SU_1$, $h_{2,2}$ denotes the channel coefficient between $BS_2$ and $SU_2$, $N_0$ denotes white noise, $p_1$ denotes a power adjustment factor of $SU_1$ calculated according to the equation (66), $\gamma_2$ denotes a demodulation threshold of $SU_2$, and $k_3$ denotes the normalized transmission signal power in a case of K=4. The data signal can be modulated correctly only if a signal to interference plus noise ratio of the data signal received by $BS_2$ from $SU_2$ is greater than or equal to the demodulation threshold of $SU_2$, and the following equation is obtained:

$$SINR_{2,2} = \frac{p_2^{(2)} k_3 \left( h_{2,2} \right)^2}{N_0 + p_1 \left( h_{1,2} \right)^2} \geq \gamma_2 \quad (69)$$

The second power adjustment factor $p_2^{(2)}$ of $SU_2$ may be calculated as follows according to the above equation (69).

$$p_2^{(2)} \geq \frac{\gamma_2 \left( N_0 + p_1 \left( h_{1,2} \right)^2 \right)}{k_3 \left( h_{2,2} \right)^2} \quad (70)$$

The setting unit 212 sets the power adjustment factor $p_2$ of $SU_2$ as follows based on the first power adjustment factor obtained according to the equation (68) and the second power adjustment factor obtained according to the equation (70).

$$p_2 = \max \left\{ p_2^{(1)}, p_2^{(2)} \right\} \quad (71)$$

Therefore, in a case of $\beta_1 \leq \beta_2$, the setting unit 212 calculates the power adjustment factor $p_2$ of $SU_2$ through two steps, and calculates the power adjustment factor $p_1$ of $SU_1$ through one step.

In the embodiment, the setting unit 212 may further set demodulation time information of the first user equipment and the second user equipment based on location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to the process in the first embodiment, which is not described repeatedly here anymore.

As described above, in the fourth embodiment, in a case that the transmission mode information of the first user equipment is uplink transmission, the setting unit 212 may set waveform parameters for the first user equipment and the second user equipment, and set the power adjustment factors in a case that the waveform parameter does not meet the demodulated requirement of the receiving end. In this way, the data signal can be demodulated correctly at the receiving end, thereby implementing non-orthogonal frequency spectrum sharing.

Fig. 5 is a schematic diagram of a process of non-orthogonal frequency spectrum sharing in multiple systems in the embodiment of the present disclosure. As shown in Fig. 5, when a new user accesses into the system, the new user reports location information. The existing user may report currently-updated location information periodically or occasionally. The new user may also report transmission mode information and waveform parameter information thereof when accessing into the system. The existing user may also report currently-updated transmission mode information periodically or occasionally. Next, the electronic device 200 may determine whether there is available idle frequency spectrum, and allocate the available idle frequency spectrum to the new user in a case that there is available idle frequency spectrum. The electronic device 200 may determine whether the new user is located in the strong interference region in a case that there is no available idle frequency spectrum. In a case that the new user is not located in the strong interference region, the electronic device 200 may allocate to the new user equipment a frequency spectrum of a user which has the same transmission mode as the new user and is located in a region other than the strong interference region in an adjacent system. In a case that the new user equipment is located in the strong interference region, the electronic device 200 determines whether transmission mode information of the new user is uplink transmission or downlink transmission, allocates to the new user equipment a frequency spectrum of a user having the same transmission mode of the new user in the adjacent system, acquires channel information, and sets demodulation time information and waveform parameters and/or power adjustment factors according to the embodiment of the present disclosure.

In the embodiment of the present disclosure, when the new user accesses into the system, the method according to the embodiment of the present disclosure may be triggered to be executed. In other words, every time a new user accesses into the system, the frequency spectrum is allocated and the parameter is set as shown in Fig. 5. Frequency spectrum information, waveform parameters and power adjustment factors of all user equipments in the first cell and the second cell are unchanged during a time interval from a time when a new user accesses into a system to a time when a next new user accesses into the system. According to another embodiment of the present disclosure, the method according to the embodiment of the present disclosure may be executed as needed. That is, in a case that it is required to allocate a frequency spectrum, or set a waveform parameter and/or a power adjustment for a user equipment in a cell, the method according to the embodiment of the present disclosure is executed.

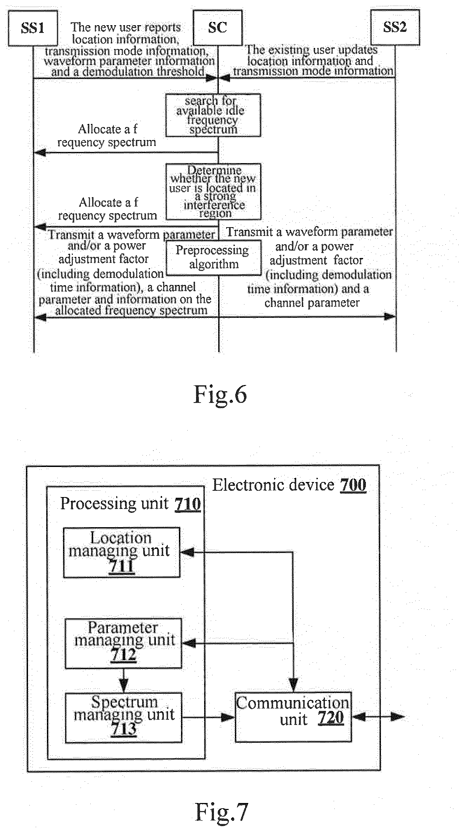

Fig. 6 is a schematic diagram of a signaling interaction process of non-orthogonal frequency spectrum sharing of multiple systems according to an embodiment of the present disclosure. As shown in Fig. 6, when a new user in the SS1 cell accesses into the system, the new user reports location information and transmission mode information, and may also report waveform parameter information and/or a demodulation threshold as needed. An existing user in the SS2 cell may update current location information and current transmission mode information. Next, a spectrum coordinator (SC) may determine whether there is available idle frequency spectrum, and may directly allocate the available idle frequency spectrum to the new user in a case that there is available idle frequency spectrum. In a case that there is no available idle frequency spectrum, the SC may determine whether the new user is located in a strong interference region. In a case that the new user is not located in the strong interference region, the SC may allocate to the new user equipment a frequency spectrum of a user which has the same transmission mode as the new user and located in a region other than the strong interference region in an adjacent system. In a case that the new user equipment is located in the strong interference region, the SC sets demodulation time information and waveform parameters and/or power adjustment factors based on transmission mode information of the new user according to preprocessing algorithm in the embodiment of the present disclosure, and acquires channel information, and allocates a frequency spectrum of the user in the adjacent system to the new user equipment. Next, the SC transmits to the new user equipment in the cell SS1 the set demodulation time information and the waveform parameter and/or the power adjustment factor, the channel parameter and information on the allocated frequency spectrum, and to the user equipment in the cell SS2 the set demodulation time information, the waveform parameter and/or the power adjustment factor and the channel parameter.

The electronic device 200 applied into the scenario of multiple systems is described above, and the electronic device 200 applied into the scenario of the single system is described in detail below

As described above, the electronic device 200 may also be applied into for example the scenario of the single system shown in Fig. 1(a).

In the embodiment of the present disclosure, the method for setting a waveform parameter and/or a power adjustment factor of the user equipment in the single system is described as follows. When a new user in the cell accesses into the system, the new user (for example, a first user equipment) reports location information and transmission mode information (the transmission mode information here includes uplink transmission and downlink transmission) to be performed, and reports waveform parameter information and/or a demodulation threshold as needed. The existing user in the cell may update current location information. Next, the SC may determine whether there is available idle frequency spectrum, and directly allocate the available idle frequency spectrum to the new user in a case that there is available idle frequency spectrum. In a case that there is no available idle frequency spectrum, the SC sets demodulation time information and a waveform parameter and/or a power adjustment factor according to preprocessing algorithm in the embodiment of the present disclosure, acquires channel information, and allocates a frequency spectrum of the other user equipment (for example, a second user equipment) in the cell to the new user equipment. Next, the SC transmits to the new user equipment in the cell the set demodulation time information, the waveform parameter and/or the power adjustment factor, the channel parameter and information on the allocated frequency spectrum, and to other user equipment the set demodulation time information, the waveform parameter and/or the power adjustment factor and the channel parameter.

How to set the waveform parameter and/or the power adjustment factor of the user equipment in the single system is described below.

Fifth Embodiment

In the fifth embodiment, the first user equipment and the second user equipment are located in the same cell, and it is assumed that transmission mode information of the first user equipment is downlink transmission.

In the embodiment of the present disclosure, the processing circuit 210 is further configured to acquire channel information based on location information of the first user equipment and the second user equipment, and set power adjustment factors based on the channel information according to a demodulated signal-to-interference-plus-noise ratio requirement or a demodulated signal-noise-ratio requirement of the receiving end.

In a case that the location information of the first user equipment and the second user equipment are acquired by the acquiring unit 211 of the electronic device 200, the electronic device 200 (for example, a channel information acquiring unit, not shown) may acquire channel information from a database in the electronic device 200 or in a device other than the electronic device 200. The channel information includes a channel coefficient $h_1$ between BS and $SU_1$ and a channel coefficient $h_2$ between BS and $SU_2$. The setting unit 212 may compare $h_1$ with $h_2$.

$h_1 > h_2$

In a case of $h_1 > h_2$, $SU_1$ is closer to BS as compared with $SU_1$. That is, $SU_2$ directly demodulates a data signal, and $SU_1$ demodulates an interfering signal first and then demodulates a data signal. $SNR_1$ denotes a signal noise ratio of a data signal received by $SU_1$ from BS, $p_1$ denotes a power adjustment factor of $SU_1$, $h_1$ denotes a channel coefficient between BS and $SU_1$, $N_0$ denotes white noise, $\gamma_1$ denotes a demodulation threshold of $SU_1$. The data signal can be correctly demodulated in a case that the signal noise ratio of the data signal received by $SU_1$ is greater than or equal to the demodulation threshold of $SU_1$, and the following equation is established:

$$SNR_1 = \frac{p_1(h_1)^2}{N_0} \geq \gamma_1 \quad (72)$$

The power adjustment factor $p_1$ of $SU_1$ may be calculated as follows according to the above equation (72).

$$p_1 \geq \frac{\gamma_1 N_0}{(h_1)^2} \quad (73)$$

$SINR_1$ denotes a signal to interference plus noise ratio of an interfering signal received by $SU_1$ from BS, $p_2^{(1)}$ denotes a first power adjustment factor of $SU_2$, $h_1$ denotes the channel coefficient between BS and $SU_1$, $N_0$ denotes white noise, $p_1$ denotes a power adjustment factor of $SU_1$ calculated according to the equation (73), and $\gamma_2$ denotes a demodulation threshold of $SU_2$. The data signal can be modulated correctly only if a signal to interference plus noise ratio of the interfering signal received by $SU_1$ is greater than or equal to the demodulation threshold of $SU_2$, and the following equation is established:

$$SINR_1 = \frac{p_2^{(1)}(h_1)^2}{N_0 + p_1(h_1)^2} \geq \gamma_2 \quad (74)$$

The first power adjustment factor $p_2^{(1)}$ of $SU_2$ may be calculated as follows according to the above equation (74).

$$p_2^{(1)} \geq \frac{\gamma_2\left(N_0 + p_1(h_1)^2\right)}{(h_1)^2} \quad (75)$$

$SINR_2$ denotes a signal to interference plus noise ratio of a data signal received by $SU_2$ from BS, $p_2^{(2)}$ denotes a second power adjustment factor of $SU_2$, $h_2$ denotes the channel coefficient between BS and $SU_2$, $N_0$ denotes white noise, $p_1$ denotes a power adjustment factor of $SU_1$ calculated according to the equation (73), and $\gamma_2$ denotes a demodulation threshold of $SU_2$. The data signal can be modulated correctly only if a signal to interference plus noise ratio of the data signal received by $SU_2$ is greater than or equal to the demodulation threshold of $SU_2$, and the following equation

is established:

$$SINR_2 = \frac{p_2^{(2)}(h_2)^2}{N_0 + p_1(h_2)^2} \geq \gamma_2 \quad (76)$$

The second power adjustment factor $p_2^{(2)}$ of $SU_2$ may be calculated as follows according to the above equation (76).

$$p_2^{(2)} \geq \frac{\gamma_2\left(N_0 + p_1(h_2)^2\right)}{(h_2)^2} \quad (77)$$

The setting unit 212 then sets the power adjustment factor $p_2$ of $SU_2$ based on the first power adjustment factor obtained according to the equation (75) and the second power adjustment factor obtained according to the equation (77).

$$p_2 = \max\{p_2^{(1)}, p_2^{(2)}\} \quad (78)$$

Therefore, in a case of $h_1 > h_2$, the setting unit 212 calculates the power adjustment factor $p_2$ of $SU_2$ through two steps, and calculates the power adjustment factor $p_1$ of $SU_1$ through one step.

$h_1 \leq h_2$

In a case of $h_1 \leq h_2$, $SU_2$ is closer to BS as compared with $SU_1$. That is, $SU_1$ directly demodulates a data signal, and $SU_2$ demodulates an interfering signal first and then demodulates a data signal. $SNR_2$ denotes a signal noise ratio of a data signal received by $SU_2$ from BS, $p_2$ denotes a power adjustment factor of $SU_2$, $h_2$ denotes a channel coefficient between BS and $SU_2$, $N_0$ denotes white noise, $\gamma_2$ denotes a demodulation threshold of $SU_2$. The data signal can be correctly demodulated in a case that the signal noise ratio of the data signal received by $SU_2$ is greater than or equal to the demodulation threshold of $SU_2$, and the following equation is established:

$$SNR_2 = \frac{p_2(h_2)^2}{N_0} \geq \gamma_2 \quad (79)$$

The power adjustment factor $p_2$ of $SU_2$ may be calculated as follows according to the above equation (79).

$$p_2 \geq \frac{\gamma_2 N_0}{(h_2)^2} \quad (80)$$

$SINR_2$ denotes a signal to interference plus noise ratio of an interfering signal received by $SU_2$ from BS, $p_1^{(1)}$ denotes a first power adjustment factor of $SU_1$, $h_2$ denotes the channel coefficient between BS and $SU_2$, $N_0$ denotes white noise, $p_2$ denotes a power adjustment factor of $SU_2$ calculated according to the equation (80), and $\gamma_1$ denotes a demodulation threshold of $SU_1$. The data signal can be modulated correctly only if a signal to interference plus noise ratio of the interfering signal received by $SU_2$ is greater than or equal to the demodulation threshold of $SU_1$, and the following equation is obtained:

$$SINR_2 = \frac{p_1^{(1)}(h_2)^2}{N_0 + p_2(h_2)^2} \geq \gamma_1 \quad (81)$$

The first power adjustment factor $p_1^{(1)}$ of $SU_1$ may be calculated as follows according to the above equation (81).

$$p_1^{(1)} \geq \frac{\gamma_1\left(N_0 + p_2\left(h_2\right)^2\right)}{\left(h_2\right)^2} \quad (82)$$

$SINR_1$ denotes a signal to interference plus noise ratio of a data signal received by $SU_1$ from BS, $p_1^{(2)}$ denotes a second power adjustment factor of $SU_1$, $h_1$ denotes the channel coefficient between BS and $SU_1$, $N_0$ denotes white noise, $p_2$ denotes a power adjustment factor of $SU_2$ calculated according to the equation (80), and $\gamma_1$ denotes a demodulation threshold of $SU_1$. The data signal can be modulated correctly only if a signal to interference plus noise ratio of the data signal received by $SU_1$ is greater than or equal to the demodulation threshold of $SU_1$, and the following equation is obtained:

$$SINR_1 = \frac{p_1^{(2)}\left(h_1\right)^2}{N_0 + p_2\left(h_1\right)^2} \geq \gamma_1 \quad (83)$$

The second power adjustment factor $p_1^{(2)}$ of $SU_1$ may be calculated as follows according to the above equation (83).

$$p_1^{(2)} \geq \frac{\gamma_1\left(N_0 + p_2\left(h_1\right)^2\right)}{\left(h_1\right)^2} \quad (84)$$

The setting unit 212 then sets the power adjustment factor $p_1$ of $SU_1$ based on the first power adjustment factor obtained according to the equation (82) and the second power adjustment factor obtained according to the equation (84).

$$p_1 = \max\{p_1^{(1)}, p_1^{(2)}\} \quad (85)$$

Therefore, in a case of $h_1 \leq h_2$, the setting unit 212 calculates the power adjustment factor $p_1$ of $SU_1$ through two steps, and calculates the power adjustment factor $p_2$ of $SU_2$ through one step.

In the embodiment of the present disclosure, the processing circuit 210 is further configured to: determine that the set power adjustment factor exceeds an adjustment range of a power amplifier at the transmitting end; reset the power adjustment factor, so that the reset power adjustment factor is in the adjustment range of the power amplifier at the transmitting end; acquire waveform parameter information of the first user equipment and the second user equipment; and set waveform parameters of the first user equipment and the second user equipment, in order that a demodulated signal-to-interference-plus-noise ratio requirement or a demodulated signal-noise-ratio requirement of the receiving end can be met.

The power amplifier at the transmitting end has an adjustment range. After the setting unit 212 calculates the power adjustment factor $p_2$ of $SU_2$ and the power adjustment factor $p_1$ of $SU_1$ based on the described steps, if the power adjustment factor exceeds the adjustment range of the power amplifier at the transmitting end, the power adjustment factor needs to be reset. For example, in a case that the calculated power adjustment factor is less than a minimum power adjustment factor of the power amplifier, the power adjustment factor is reset to the minimum power adjustment factor of the power amplifier. In a case that the calculated power adjustment factor is greater than a maximum power adjustment factor of the power amplifier, the power adjustment factor is reset to the maximum power adjustment factor of the power amplifier.

In the embodiment of the present disclosure, after resetting the power adjustment factor, the setting unit 212 may also set the waveform parameters of the first user equipment and the second user equipment. With taking a filter overlapping factor K as an example, K may be 1, 2, 3 or 4. A minimum transmission signal power is generated in a case of K=1, and a maximum transmission signal power is generated in a case of K=4.

In the embodiment of the present disclosure, the electronic device 200 (for example, the waveform parameter information acquiring unit, not shown) may acquire waveform parameter information of the first user equipment and the second user equipment. The waveform parameter information may include a range of a waveform parameter which may be used by the user equipment, for example, a range of an overlapping factor, may also include a waveform parameter used by the user equipment currently, for example a value of an overlapping factor, may also include information on whether the user equipment may adjust the waveform parameter. When the user equipment accesses into the system for the first time, the user equipment may report waveform parameter information of the user equipment, may report waveform parameter information along with the location information, or may also report the waveform parameter information separately from the location information. After acquiring the waveform parameter information of the user equipment, the electronic device 200 may set the waveform parameters of the first user equipment and the second user equipment, in order that the demodulated signal-to-interference-plus-noise ratio requirement or the demodulated signal-noise-ratio requirement of the receiving end can be met.

In the embodiment of the present disclosure, in a case of $h_1 > h_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment. In a case of $h_1 \leq h_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment.

In the embodiment of the present disclosure, the setting unit 212 may set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to that of the first embodiment, which is not described repeatedly here anymore.

As described above, in the fifth embodiment, in a case that the transmission mode information of the first user equipment is downlink transmission, the setting unit 212 may set power adjustment factors for the first user equipment and the second user equipment, and may also set waveform parameters in a case that the power adjustment factor exceeds an adjustment range of the power amplifier at the transmitting end. In this way, the data signal can be demodulated correctly at the receiving end, thereby implementing non-orthogonal frequency spectrum sharing.

Sixth Embodiment

In the sixth embodiment, the first user equipment and the second user equipment are located in the same cell, and it is assumed that transmission mode information of the first user equipment is downlink transmission.

In the embodiment of the present disclosure, the processing circuit 210 is further configured to acquire channel information based on location information of the first user equipment and the second user equipment, and acquire waveform parameter information of the first user equipment and the second equipment; and set waveform parameters of the first user equipment and the second user equipment based on the channel information and the waveform parameter information, to meet a demodulated signal-to-interference-plus-noise ratio requirement or a demodulated signal-noise-ratio requirement of the receiving end.

In the embodiment of the present disclosure, the setting unit 212 determines $h_1$ and $h_2$, and compares $h_1$ with $h_2$. The process is the same as the process in the fifth embodiment, and which is not described repeatedly here anymore.

In the embodiment of the present disclosure, the electronic device 200(for example, the waveform parameter information acquiring unit, not shown) may acquire waveform parameter information of the first user equipment and the second user equipment. The waveform parameter information may include a range of a waveform parameter which may be used by the user equipment, for example, a range of an overlapping factor, may also include a waveform parameter used by the user equipment currently, for example a value of an overlapping factor, may also include information on whether the user equipment may adjust the waveform parameter. After acquiring the waveform parameter information of the user equipment, the electronic device 200 may set the waveform parameters of the first user equipment and the second user equipment, to meet the demodulated signal-to-interference-plus-noise ratio requirement or the demodulated signal-noise-ratio requirement of the receiving end.

In the embodiment of the present disclosure, in a case of $h_1 > h_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment. In a case of $h_1 \leq h_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment.

In the embodiment of the present disclosure, the processing circuit 210 is further configured to: determine that the set waveform parameter does not meet the demodulated signal-to-interference-plus-noise ratio requirement or the demodulated signal-noise-ratio requirement of the receiving end; and further set a power adjustment factor based on the channel formation, to meet the demodulated signal-to-interference-plus-noise ratio requirement or the demodulated signal-noise-ratio requirement of the receiving end.

As described above, the waveform parameter for example the overlapping factor has a value range. Therefore, the waveform parameter may not meet the demodulated requirement of the receiving end no matter how the waveform parameter is adjusted. The processing circuit 210 (for example, the determining unit, not shown) may be configured to determine whether the set waveform parameter meets the demodulated signal-to-interference-plus-noise ratio requirement or the demodulated signal-noise-ratio requirement of the receiving end after configuring the waveform parameter, and further set the power adjustment factors in a case that the set waveform parameter does not meet the demodulated requirement. A normalized transmission signal power may be also defined here. For example, a ratio $k_3$ of a transmission signal power generated in a case of K=4 to the transmission signal power generated in a case of K=1 serve as a normalized transmission signal power in a case of K=4. The content is the same as that in the second embodiment, which is not described repeatedly here anymore.

How to set the power adjustment factor is described below.

$h_1 > h_2$

In a case of $h_1 > h_2$, the overlapping factor $K_1$ of $SU_1$ is less than the overlapping factor $K_2$ of $SU_2$ as described above, and it is assumed $K_1 = 1$ and $K_2 = 4$ here.

In a case of $h_1 > h_2$, $SU_1$ is closer to BS as compared with $SU_2$. That is, $SU_2$ directly demodulates a data signal, and $SU_1$ demodulates an interfering signal first and then demodulates a data signal. $SNR_1$ denotes a signal noise ratio of a data signal received by $SU_1$ from BS, $p_1$ denotes a power adjustment factor of $SU_1$, $h_1$ denotes a channel coefficient between BS and $SU_1$, $N_0$ denotes white noise, $\gamma_1$ denotes a demodulation threshold of $SU_1$. The data signal can be correctly demodulated in a case that the signal noise ratio of the data signal received by $SU_1$ is greater than or equal to the demodulation threshold of $SU_1$, and the following equation is established:

$$SNR_1 = \frac{p_1 (h_1)^2}{N_0} \geq \gamma_1 \quad (86)$$

The power adjustment factor $p_1$ of $SU_1$ may be calculated as follows according to the above equation (86).

$$p_1 \geq \frac{\gamma_1 N_0}{(h_1)^2} \quad (87)$$

$SINR_1$ denotes a signal to interference plus noise ratio of an interfering signal received by $SU_1$ from BS, $p_2^{(1)}$ denotes a first power adjustment factor of $SU_2$, $h_1$ denotes the channel coefficient between BS and $SU_1$, $N_0$ denotes white noise, $p_1$ denotes a power adjustment factor of $SU_1$ calculated according to the equation (87), $\gamma_2$ denotes a demodulation threshold of $SU_2$, and $k_3$ denotes a normalized transmission signal power in a case of K=4. The data signal can be modulated correctly only if a signal to interference plus noise ratio of the interfering signal received by $SU_1$ is greater than or equal to the demodulation threshold of $SU_2$, and the following equation is established:

$$SINR_1 = \frac{p_2^{(1)} k_3 (h_1)^2}{N_0 + p_1 (h_1)^2} \geq \gamma_2 \quad (88)$$

The first power adjustment factor $p_2^{(1)}$ of $SU_2$ may be calculated as follows according to the above equation (88).

$$p_2^{(1)} \geq \frac{\gamma_2 \left( N_0 + p_1 (h_1)^2 \right)}{k_3 (h_1)^2} \quad (89)$$

$SINR_2$ denotes a signal to interference plus noise ratio of a data signal received by $SU_2$ from BS, $p_2^{(2)}$ denotes a second power adjustment factor of $SU_2$, $h_2$ denotes the channel coefficient between BS and $SU_2$, $N_0$ denotes white

noise, $p_1$ denotes a power adjustment factor of $SU_1$ calculated according to the equation (87), $\gamma_2$ denotes a demodulation threshold of $SU_2$, and $k_3$ denotes a normalized transmission signal power in a case of K=4. The data signal can be modulated correctly only if a signal to interference plus noise ratio of the data signal received by $SU_2$ is greater than or equal to the demodulation threshold of $SU_2$, and the following equation is established:

$$SINR_2 = \frac{p_2^{(2)} k_3 (h_2)^2}{N_0 + p_1 (h_2)^2} \geq \gamma_2 \quad (90)$$

The second power adjustment factor $p_2^{(2)}$ of $SU_2$ may be calculated as follows according to the above equation (90).

$$p_2^{(2)} \geq \frac{\gamma_2 \left(N_0 + p_1 (h_2)^2\right)}{k_3 (h_2)^2} \quad (91)$$

The setting unit 212 then sets the power adjustment factor $p_2$ of $SU_2$ based on the first power adjustment factor obtained according to the equation (89) and the second power adjustment factor obtained according to the equation (91).

$$p_2 = \max\{p_2^{(1)}, p_2^{(2)}\} \quad (92)$$

Therefore, in a case of $h_1 > h_2$, the setting unit 212 calculates the power adjustment factor $p_2$ of $SU_2$ through two steps, and calculates the power adjustment factor $p_1$ of $SU_1$ through one step.

$h_1 \leq h_2$

In a case of $h_1 \leq h_2$, the overlapping factor $K_1$ of $SU_1$ is greater than the overlapping factor $K_2$ of $SU_2$ as described above, it is assumed that $K_1=4$ and $K_2=1$.
In a case of $h_1 \leq h_2$, $SU_2$ is closer to BS as compared with $SU_1$. That is, $SU_1$ directly demodulates a data signal, and $SU_2$ demodulates an interfering signal first and then demodulates a data signal. $SNR_2$ denotes a signal noise ratio of a data signal received by $SU_2$ from BS, $p_2$ denotes a power adjustment factor of $SU_2$, $h_2$ denotes a channel coefficient between BS and $SU_2$, $N_0$ denotes white noise, $\gamma_2$ denotes a demodulation threshold of $SU_2$. The data signal can be correctly demodulated in a case that the signal noise ratio of the data signal received by $SU_2$ is greater than or equal to the demodulation threshold of $SU_2$, and the following equation is established:

$$SNR_2 = \frac{p_2 (h_2)^2}{N_0} \geq \gamma_2 \quad (93)$$

The power adjustment factor $p_2$ of $SU_2$ may be calculated as follows according to the above equation (93).

$$p_2 \geq \frac{\gamma_2 N_0}{(h_2)^2} \quad (94)$$

$SINR_2$ denotes a signal to interference plus noise ratio of an interfering signal received by $SU_2$ from BS, $p_1^{(1)}$ denotes a first power adjustment factor of $SU_1$, $h_2$ denotes the channel coefficient between BS and $SU_2$, $N_0$ denotes white noise, $p_2$ denotes a power adjustment factor of $SU_2$ calculated according to the equation (94), $\gamma_1$ denotes a demodulation threshold of $SU_1$, and $k_3$ denotes a normalized transmission signal power in a case of K=4. The data signal can be modulated correctly only if a signal to interference plus noise ratio of the interfering signal received by $SU_2$ is greater than or equal to the demodulation threshold of $SU_1$, and the following equation is established:

$$SINR_2 = \frac{p_1^{(1)} k_3 (h_2)^2}{N_0 + p_2 (h_2)^2} \geq \gamma_1 \quad (95)$$

The first power adjustment factor $p_1^{(1)}$ of $SU_1$ may be calculated as follows according to the above equation (95).

$$p_1^{(1)} \geq \frac{\gamma_1 \left(N_0 + p_2 (h_2)^2\right)}{k_3 (h_2)^2} \quad (96)$$

$SINR_1$ denotes a signal to interference plus noise ratio of a data signal received by $SU_1$ from BS, $p_1^{(2)}$ denotes a second power adjustment factor of $SU_1$, $h_1$ denotes the channel coefficient between BS and $SU_1$, $N_0$ denotes white noise, $p_2$ denotes a power adjustment factor of $SU_2$ calculated according to the equation (94), $\gamma_1$ denotes a demodulation threshold of $SU_1$, and $k_3$ denotes a normalized transmission signal power in a case of K=4. The data signal can be modulated correctly only if a signal to interference plus noise ratio of the data signal received by $SU_1$ is greater than or equal to the demodulation threshold of $SU_1$, and the following equation is established:

$$SINR_1 = \frac{p_1^{(2)} k_3 (h_1)^2}{N_0 + p_2 (h_1)^2} \geq \gamma_1 \quad (97)$$

The second power adjustment factor $p_1^{(2)}$ of $SU_1$ may be calculated as follows according to the above equation (97).

$$p_1^{(2)} \geq \frac{\gamma_1 \left(N_0 + p_2 (h_1)^2\right)}{k_3 (h_1)^2} \quad (98)$$

The setting unit 212 then sets the power adjustment factor $p_1$ of $SU_1$ based on the first power adjustment factor obtained according to the equation (96) and the second power adjustment factor obtained according to the equation (98).

$$p_1 = \max \{ p_1^{(1)}, p_1^{(2)} \} \quad (99)$$

Therefore, in a case of $h_1 \leq h_2$, the setting unit 212 calculates the power adjustment factor $p_1$ of $SU_1$ through two steps, and calculates the power adjustment factor $p_2$ of $SU_2$ through one step.

In the embodiment of the present disclosure, the setting unit 212 may be further configured to set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to that of the first embodiment, which is not described repeatedly here anymore.

As described above, in the sixth embodiment, in a case that the transmission mode information of the first user equipment is downlink transmission, the setting unit 212 may set waveform parameters for the first user equipment and the second user equipment, and may also set the power adjustment factors in a case that the waveform parameter does not meet the demodulated requirement of the receiving end. In this way, the data signal can be demodulated correctly at the receiving end, thereby implementing non-orthogonal frequency spectrum sharing.

Seventh Embodiment

In the seventh embodiment, the first user equipment and the second user equipment are located in the same cell, and it is assumed that transmission mode information of the first user equipment is uplink transmission.

In the embodiment of the present disclosure, the processing circuit 210 is further configured to acquire channel information based on location information of the first user equipment and the second user equipment, and set power adjustment factors based on the channel information according to the demodulated signal-to-interference-plus-noise ratio requirement or the demodulated signal-noise-ratio requirement of the receiving end.

In the embodiment of the present disclosure, the setting unit 212 determines $h_1$ and $h_2$, and compares $h_1$ with $h_2$. The process is the same as the process in the fifth embodiment, and which is not described repeatedly here anymore.

$h > h_2$

In a case of $h_1 > h_2$, $SU_1$ is closer to BS as compared with $SU_2$. That is, BS directly demodulates a signal from $SU_1$, and then demodulates a signal from $SU_2$. $SNR_2$ denotes a signal noise ratio of a data signal received by BS from $SU_2$, $p_2$ denotes a power adjustment factor of $SU_2$, $h_2$ denotes a channel coefficient between BS and $SU_2$, $N_0$ denotes white noise, and $\gamma_2$ denotes a demodulation threshold of $SU_2$. The data signal can be correctly demodulated in a case that the signal noise ratio of the data signal received by BS from $SU_2$ is greater than or equal to the demodulation threshold of $SU_2$, and the following equation is established:

$$SNR_2 = \frac{p_2(h_2)^2}{N_0} \geq \gamma_2 \quad (100)$$

The power adjustment factor $p_2$ of $SU_2$ may be calculated as follows according to the above equation (100).

$$p_2 \geq \frac{\gamma_2 N_0}{(h_2)^2} \quad (101)$$

$SINR_1$ denotes a signal to interference plus noise ratio of a data signal received by BS from $SU_1$, $p_1$ denotes a power adjustment factor of $SU_1$, $h_1$ denotes the channel coefficient between BS and $SU_1$, $h_2$ denotes the channel coefficient between BS and $SU_2$, $N_0$ denotes white noise, $p_2$ denotes a power adjustment factor of $SU_2$ calculated according to the equation (101), and $\gamma_1$ denotes a demodulation threshold of $SU_1$. The data signal can be modulated correctly only if a signal to interference plus noise ratio of the data signal received by BS from $SU_1$ is greater than or equal to the demodulation threshold of $SU_1$, and the following equation is established:

$$SINR_1 = \frac{p_1(h_1)^2}{N_0 + p_2(h_2)^2} \geq \gamma_1 \quad (102)$$

The power adjustment factor $p_1$ of $SU_1$ may be calculated as follows according to the above equation (102).

$$p_1 \geq \frac{\gamma_1(N_0 + p_2(h_2)^2)}{(h_1)^2} \quad (103)$$

$h_1 \leq h_2$

In a case of $h_1 \leq h_2$, $SU_2$ is closer to BS as compared with $SU_1$. That is, BS demodulates a signal from $SU_2$ first, and then demodulates a signal from $SU_1$. $SNR_1$ denotes a signal noise ratio of a data signal received by BS from $SU_1$, $p_1$ denotes a power adjustment factor of $SU_1$, $h_1$ denotes a channel coefficient between BS and $SU_1$, $N_0$ denotes white noise, and $\gamma_1$ denotes a demodulation threshold of $SU_1$. The data signal can be correctly demodulated in a case that the signal noise ratio of the data signal received by BS from $SU_1$ is greater than or equal to the demodulation threshold of $SU_1$, and the following equation is established:

$$SNR_1 = \frac{p_1(h_1)^2}{N_0} \geq \gamma_1 \quad (104)$$

The power adjustment factor $p_1$ of $SU_1$ may be calculated as follows according to the above equation (104).

$$p_1 \geq \frac{\gamma_1 N_0}{(h_1)^2} \quad (105)$$

$SINR_2$ denotes a signal to interference plus noise ratio of a data signal received by BS from $SU_2$, $p_2$ denotes a power adjustment factor of $SU_2$, $h_2$ denotes the channel coefficient between BS and $SU_2$, $h_1$ denotes a channel coefficient between BS and $SU_1$, $N_0$ denotes white noise, $p_1$ denotes the power adjustment factor of $SU_1$ calculated according to the equation (105), and $\gamma_2$ denotes a demodulation threshold of $SU_2$. The data signal can be modulated correctly only if a signal to interference plus noise ratio of the data signal received by BS from $SU_2$ is greater than or equal to the demodulation threshold of $SU_2$, and the following equation is established:

$$SINR_2 = \frac{p_2(h_2)^2}{N_0 + p_1(h_1)^2} \geq \gamma_2 \quad (106)$$

The power adjustment factor $p_2$ of $SU_2$ may be calculated as follows according to the above equation (106).

$$p_2 \geq \frac{\gamma_2(N_0 + p_1(h_1)^2)}{(h_2)^2} \quad (107)$$

In the embodiment of the present disclosure, the processing circuit 210 is further configured to: determine that the set power adjustment factor exceeds an adjustment range of a power amplifier at the transmitting end; reset the power adjustment factor, so that the reset power adjustment factor is in the adjustment range of the power amplifier at the transmitting end; acquire waveform parameter information of the first user equipment and the second user equipment; and set waveform parameters of the first user equipment and the second user equipment, in order that the demodulated signal-to-interference-plus-noise ratio requirement or the demodulated signal-noise-ratio requirement of the receiving end can be met.

The power amplifier at the transmitting end has an adjustment range. After the setting unit 212 calculates the power adjustment factor $p_2$ of $SU_2$ and the power adjustment factor $p_1$ of $SU_1$ based on the described steps, if the power adjustment factor exceeds the adjustment range of the power amplifier at the transmitting end, the power adjustment factor needs to be reset. For example, in a case that the calculated power adjustment factor is less than a minimum power adjustment factor of the power amplifier, the power adjustment factor is reset to the minimum power adjustment factor of the power amplifier. In a case that the calculated power adjustment factor is greater than a maximum power adjustment factor of the power amplifier, the power adjustment factor is reset to the maximum power adjustment factor of the power amplifier.

In the embodiment of the present disclosure, after resetting the power adjustment factors, the setting unit 212 may also set the waveform parameters of the first user equipment and the second user equipment. With taking a filter overlapping factor K as an example, K may be 1, 2, 3 or 4. A minimum transmission signal power is generated in a case of K=1, and a maximum transmission signal power is generated in a case of K=4.

In the embodiment of the present disclosure, the electronic device 200 (for example, a waveform parameter information acquiring unit, not shown) may acquire waveform parameter information of the first user equipment and the second user equipment. The waveform parameter information may include a range of a waveform parameter which may be used by the user equipment, for example, a range of an overlapping factor, may also include a waveform parameter used by the user equipment currently, for example a value of an overlapping factor, may also include information on whether the user equipment may adjust the waveform parameter. Here, the waveform parameter information of the user equipment may be reported when the user equipment accesses into the system for the first time, or the waveform parameter information may be reported along with the location information, or the waveform parameter information may be reported separately from the location information. After acquiring the waveform parameter information of the user equipment, the electronic device 200 may set waveform parameters of the first user equipment and the second user equipment, in order that the demodulated signal-to-interference-plus-noise ratio requirement or the demodulated signal-noise-ratio requirement of the receiving end can be met.

In the embodiment of the present disclosure, in a case of $h_1 > h_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment. In a case of $h_1 \leq h_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment.

In the embodiment of the present disclosure, the setting unit 212 may set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to the process in the first embodiment, which is not described repeatedly here anymore.

As described above, in the seventh embodiment, in a case that the transmission mode information of the first user equipment is uplink transmission, the setting unit 212 may set power adjustment factors for the first user equipment and the second user equipment, and set waveform parameters in a case that the power adjustment factor exceeds an adjustment range of the power amplifier at the transmitting end. In this way, the data signal can be demodulated correctly at the receiving end, thereby implementing non-orthogonal frequency spectrum sharing.

Eighth Embodiment

In the eighth embodiment, the first user equipment and the second user equipment are located in the same cell, and it is assumed that transmission mode information of the first user equipment is uplink transmission.

In the embodiment of the present disclosure, the processing circuit 210 is further configured to acquire channel information based on location information of the first user equipment and the second user equipment, acquire waveform parameter information of the first user equipment and the second user equipment, and set waveform parameters of the first user equipment and the second user equipment based on the channel information and the waveform parameter information, to meet a demodulated signal-to-interference-plus-noise ratio requirement or a demodulated signal-noise-ratio requirement of the receiving end.

In the embodiment of the present disclosure, the setting unit 212 determines $h_1$ and $h_2$ first and then compares $h_1$ with $h_2$. The process is the same as the process in the fifth embodiment, which is not described repeatedly here anymore.

In the embodiment of the present disclosure, the electronic device 200 (for example, a waveform parameter information acquiring unit, not shown) may acquire waveform parameter information of the first user equipment and the second user equipment. The waveform parameter information may include a range of a waveform parameter which may be used by the user equipment, for example, a range of an overlapping factor, may also include a waveform parameter which is used by the user equipment currently, for example a value of the overlapping factor, may also include information on whether the user equipment may adjust the waveform parameter. After acquiring the waveform parameter information of the user equipment, the electronic device 200 may set the waveform parameters of the first user equipment and the second user equipment, to meet the demodulated signal-to-interference-plus-noise ratio requirement or the demodulated signal-noise-ratio requirement of the receiving end.

In the embodiment of the present disclosure, in a case of $h_1 > h_2$, the setting unit 212 sets the overlapping factor $K_1$ of the first user equipment to greater than the overlapping factor $K_2$ of the second user equipment. For example, the setting unit 212 sets $K_1$ to a maximum overlapping factor in the range of the overlapping factor of the first user equipment, and sets $K_2$ to a minimum overlapping factor in the range of the overlapping factor of the second user equipment. In a case of $h_1 \leq h_2$, the setting unit 212 sets the overlapping factor $K_1$ of the first user equipment to less than the overlapping factor $K_2$ of the second user equipment. For example, the setting unit 212 sets $K_1$ to a minimum overlapping factor in the range of the overlapping factor of the first user equipment, and sets $K_2$ to a maximum overlapping factor in the range of the overlapping factor of the second user equipment.

In the embodiment of the present disclosure, the processing circuit 210 is further configured to determine that the set waveform parameter does not meet the demodulated signal-to-interference-plus-noise ratio requirement or the demodulated signal-noise-ratio requirement of the receiving end, and further set power adjustment factors based on the channel information, to meet the demodulated signal-to-interference-plus-noise ratio requirement or the demodulated signal-noise-ratio requirement of the receiving end.

As described above, the waveform parameter for example the overlapping factor has a value range. Therefore, the waveform parameter may not meet the demodulated requirement of the receiving end no matter how the waveform parameter is adjusted. The processing circuit 210 (for example, the determining unit, not shown) may be configured to determine whether the set waveform parameter meets the demodulated signal-to-interference-plus-noise ratio requirement or the demodulated signal-noise-ratio requirement of the receiving end after configuring the waveform parameter, and further set the power adjustment factor in a case that the set waveform parameter does not meet the demodulated requirement. A normalized transmission signal power may also be defined here. For example, a ratio $k_3$ of a transmission signal power generated in a case of K=4 to a transmission signal power generated in a case of K=1 is defined as a normalized transmission signal power in a case of K=4. The content is the same as that of the second embodiment, and is not described repeatedly here anymore.

How to set the power adjustment factor is described below.

$h_1 > h_2$

In a case of $h_1 > h_2$, the overlapping factor $K_1$ of $SU_1$ is greater than the overlapping factor $K_2$ of $SU_2$ as described above, it is assumed $K_1=4$ and $K_2=1$ here.

In a case of $h_1 > h_2$, $SU_1$ is closer to BS as compared with $SU_2$. That is, BS demodulates a signal from $SU_1$ first, and then demodulates a signal from $SU_2$. $SNR_2$ denotes a signal noise ratio of a data signal received by BS from $SU_2$, $p_2$ denotes a power adjustment factor of $SU_2$, $h_2$ denotes the channel coefficient between BS and $SU_2$, $N_0$ denotes white noise, and $\gamma_2$ denotes a demodulation threshold of $SU_2$. The data signal can be modulated correctly only if a signal noise ratio of the data signal received by BS from $SU_2$ is greater than or equal to the demodulation threshold of $SU_2$, and the following equation is established:

$$SNR_2 = \frac{p_2 (h_2)^2}{N_0} \geq \gamma_2 \quad (108)$$

The power adjustment factor $p_2$ of $SU_2$ may be calculated as follows according to the above equation (108).

$$p_2 \geq \frac{\gamma_2 N_0}{(h_2)^2} \quad (109)$$

$SINR_1$ denotes a signal to interference plus noise ratio of a data signal received by BS from $SU_1$, $p_1$ denotes a power adjustment factor of $SU_1$, $h_1$ denotes the channel coefficient between BS and $SU_1$, $h_2$ denotes the channel coefficient between BS and $SU_2$, $N_0$ denotes white noise, $p_2$ denotes a power adjustment factor of $SU_2$ calculated according to the equation (109), $\gamma_1$ denotes a demodulation threshold of $SU_1$, and $k_3$ denotes the normalized transmission signal power in a case of K=4. The data signal can be modulated correctly only if a signal to interference plus noise ratio of the data signal received by BS from $SU_1$ is greater than or equal to the demodulation threshold of $SU_1$, and the following equation is established:

$$SINR_1 = \frac{k_3 p_1 (h_1)^2}{N_0 + p_2 (h_2)^2} \geq \gamma_1 \quad (110)$$

The power adjustment factor $p_1$ of $SU_1$ may be calculated as follows according to the above equation (110).

$$p_1 \geq \frac{\gamma_1 \left(N_0 + p_2 (h_2)^2\right)}{k_3 (h_1)^2} \quad (111)$$

$h_1 \leq h_2$

In a case of $h_1 \leq h_2$, the overlapping factor $K_1$ of $SU_1$ is less than the overlapping factor $K_2$ of $SU_2$ as described

above, and it is assumed $K_1=1$ and $K_2=4$ here.

In a case of $h_1 \leq h_2$, $SU_2$ is closer to BS as compared with $SU_1$. That is, BS demodulates a signal from $SU_2$ first, and then demodulates a signal from $SU_1$. $SNR_1$ denotes a signal noise ratio of a data signal received by BS from $SU_1$, $p_1$ denotes a power adjustment factor of $SU_1$, $h_1$ denotes a channel coefficient between BS and $SU_1$, $N_0$ denotes white noise, and $\gamma_1$ denotes a demodulation threshold of $SU_1$. The data signal can be correctly demodulated in a case that the signal noise ratio of the data signal received by BS from $SU_1$ is greater than or equal to the demodulation threshold of $SU_1$, and the following equation is established:

$$SNR_1 = \frac{p_1(h_1)^2}{N_0} \geq \gamma_1 \quad (112)$$

The power adjustment factor $p_1$ of $SU_1$ may be calculated as follows according to the above equation (112).

$$p_1 \geq \frac{\gamma_1 N_0}{(h_1)^2} \quad (113)$$

$SINR_2$ denotes a signal to interference plus noise ratio of a data signal received by BS from $SU_2$, $p_2$ denotes a power adjustment factor of $SU_2$, $h_2$ denotes the channel coefficient between BS and $SU_2$, $h_1$ denotes the channel coefficient between BS and $SU_1$, $N_0$ denotes white noise, $p_1$ denotes the power adjustment factor of $SU_1$ calculated according to the equation (111), $\gamma_2$ denotes a demodulation threshold of $SU_2$, and $k_3$ denotes a normalized transmission signal power in a case of K=4. The data signal can be modulated correctly only if a signal to interference plus noise ratio of the data signal received by BS from $SU_2$ is greater than or equal to the demodulation threshold of $SU_2$, and the following equation is established:

$$SINR_2 = \frac{k_3 p_2(h_2)^2}{N_0 + p_1(h_1)^2} \geq \gamma_2 \quad (114)$$

The power adjustment factor $p_2$ of $SU_2$ may be calculated as follows according to the above equation (114).

$$p_2 \geq \frac{\gamma_2 (N_0 + p_1(h_1)^2)}{k_3 (h_2)^2} \quad (115)$$

In the embodiment of the present disclosure, the setting unit 212 may set demodulation time information of the first user equipment and the second user equipment based on the location information of the first user equipment and the second user equipment, and transmit to the first user equipment and the second user equipment the demodulation time information of the first user equipment and the second user equipment along with the waveform parameters and/or the power adjustment factors of the first user equipment and the second user equipment through the communication unit 220. The above process is similar to the process in the first embodiment, which is not described repeatedly here anymore.

As described above, in the eighth embodiment, in a case that the transmission mode information of the first user equipment is uplink transmission, the setting unit 212 may set waveform parameters for the first user equipment and the second user equipment, and set the power adjustment factors in a case that the waveform parameter does not meet the demodulated requirement of the receiving end. In this way, the data signal can be demodulated correctly at the receiving end, thereby implementing non-orthogonal frequency spectrum sharing.

In the embodiment of the present disclosure, the wireless communication system may be a cognitive radio communication system, and the cell where the first user equipment and the second user equipment are located may be a secondary system.

Fig. 7 is a structural block diagram of another electronic device 700 in a wireless communication system according to an embodiment of the present disclosure. The wireless communication system at least includes a first cell and a second cell, and the electronic device 700 is located in the first cell.

As shown in Fig. 7, the electronic device 700 may include a processing circuit 710. It should be illustrated that the electronic device 700 may include one or more processing circuits 710. In addition, the electronic device 700 may further include a communication unit 720 such as a transceiver and the like.

As described above, similarly, the processing circuit 710 may include various discrete functional units to execute different functions and/or operations. The functional units may be a physical entity or a logical entity, and units with different names may be implemented by the same physical entity.

For example, as shown in Fig. 7, the processing circuit 710 may include a location managing unit 711, a parameter managing unit 712 and a spectrum managing unit 713.

The location managing unit 711 may acquire location information of a first user equipment in the first cell in the wireless communication system where the electronic device 700 is located, to inform a spectrum coordinator in a core network.

The parameter managing unit 712 may acquire from the spectrum coordinator a waveform parameter, demodulation time information and frequency spectrum resource information of a second user equipment in the second cell in the wireless communication system where the electronic device 700 is located, to inform the first user equipment.

The spectrum managing unit 713 may wirelessly communicate with the first user equipment using a frequency spectrum resource of the second user equipment based on the acquired waveform parameter and the acquired demodulation time information.

Preferably, the processing circuit 710 is further configured to acquire a power adjustment factor from the spectrum coordinator to inform the first user equipment, and wirelessly communicate with the first user equipment using the frequency spectrum resource of the second user equipment based on the acquired waveform parameter and the acquired power adjustment factor.

Preferably, the processing circuit 710 is further configured to acquire the waveform parameter information of the first user equipment to inform the spectrum coordinator.

Preferably, the first user equipment is located in a specific region in the first cell, and the first user equipment in the specific region is interfered by the second cell.

Preferably, the waveform parameter includes a filter overlapping factor.

Preferably, the wireless communication system is a cognitive radio communication system, and the first cell is a first secondary system, and the second cell is a second secondary system, and the electronic device 700 is a base station in the first cell.

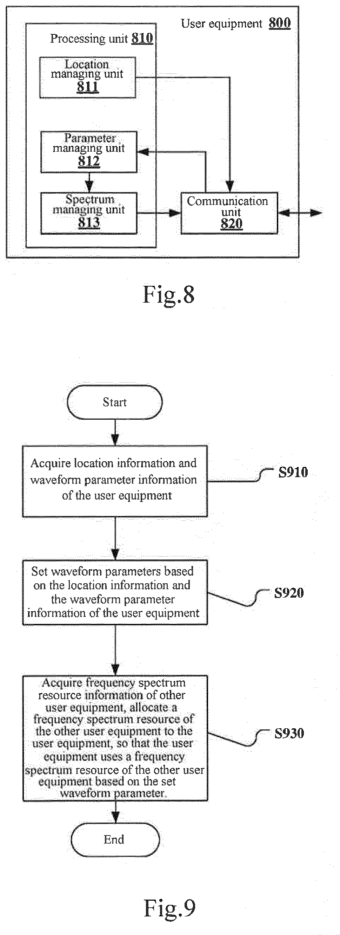

Fig. 8 is a structural block diagram of a user equipment 800 in a wireless communication system according to an embodiment of the present disclosure.

As shown in Fig. 8, the user equipment 800 may include a processing circuit 810. It should be illustrated that the user equipment 800 may include one or more processing circuits 810. In addition, the user equipment 800 may further include a communication unit 820 such as a transceiver and the like.

As described above, similarly, the processing circuit 810 may include various discrete functional units to execute different functions and/or operations. The functional units may be a physical entity or a logical entity, and units with different names may be implemented by the same physical entity.

For example, as shown in Fig. 8, the processing circuit 810 may include a location managing unit 811, a parameter managing unit 812 and a spectrum managing unit 813.

The location managing unit 811 may transmit location information of the user equipment 800 to a base station serving the user equipment 800 through a communication unit 820.

The parameter managing unit 812 may receive a waveform parameter, demodulation time information and frequency spectrum resource information of the second user equipment from the base station through the communication unit 820.

The spectrum managing unit 813 may wirelessly communicate with the base station using a frequency spectrum resource of a second user equipment based on the received waveform parameter.

Preferably, the wireless communication system at least includes a first cell and a second cell. The user equipment 800 is located in the first cell, and the second user equipment is located in the second cell.

Preferably, the processing circuit 810 is further configured to receive a power adjustment factor from the base station through the communication unit 820, and wirelessly communicate with the base station using the frequency spectrum resource of the second user equipment based on the received waveform parameter and the received power adjustment factor.

Preferably, the processing circuit 810 is further configured to transmit waveform parameter information of the user equipment 800 to the base station through the communication unit 820.

Preferably, the user equipment 800 is located in a specific region in the first cell, and the user equipment 800 in the specific region is interfered by a second cell and cannot perform normal wireless communication.

Preferably, the waveform parameter includes a filter overlapping factor.

Preferably, the wireless communication system is a cognitive radio communication system, and a first cell is a first secondary system and a second cell is a second secondary system.

To sum up, in the embodiment of the present disclosure, in an aspect, in a single system, the base station may set a waveform parameter and/or a frequency adjustment factor for the user equipment in a coverage region thereof, so that the data can be demodulated correctly at the receiving end, thereby implementing frequency spectrum sharing among different users, and improving a spectrum utilization ratio and performance of the system. In multiple systems, the SC may set a waveform parameter and/or a frequency adjustment factor for a user equipment located in a strong interference region, so that the data can be demodulated correctly at the receiving end, thereby implementing frequency spectrum sharing among different users in the adjacent cell, and improving a spectrum utilization ratio and performance of the system. In another aspect, since a parameter at the transmitting end is adjusted, a requirement for a dynamic range of a power amplifier at the transmitting end is relaxed, and a requirement for a channel condition for demodulation at the receiving end is relaxed, thereby improving demodulation performance at the receiving end. The electronic device according to the embodiment of the present disclosure may be applied into a 802.19 coexistence system, and may also be applied into a frequency spectrum sharing method in an ultra-dense network.

A wireless communication method in a wireless communication system according to an embodiment of the present disclosure is described below with reference to Fig. 9. Fig. 9 is a flow diagram of a wireless communication method according to an embodiment of the present disclosure.

As shown in Fig. 9, in step S910, location information and waveform parameter information of a user equipment are acquired.

In step S920, a waveform parameter is set based on the location information and the waveform parameter information of the user equipment.

In step S930, frequency spectrum resource information of other user equipment is acquired, and a frequency spectrum resource of the other user equipment is allocated to the user equipment based on the frequency spectrum resource information, so that the user equipment uses the frequency spectrum resource of other user equipment based on the set waveform parameter.

Preferably, the method further includes acquiring location information of other user equipment, and setting a waveform parameter based on the location information of the user equipment and the other user equipment.

Preferably, the method further includes setting power adjustment factors based on the location information of the user equipment and the other user equipment, acquiring frequency spectrum resource information of other user equipment, and allocating a frequency spectrum resource of the other user equipment to the user equipment, so that the user equipment uses a frequency spectrum resource of the other user equipment based on the set waveform parameter and the set power adjustment factor.

Preferably, the wireless communication system at least includes a first cell and a second cell, and the user equipment is located in a specific region of the first cell. The user equipment in the specific region is interfered by the second cell, and other user equipment is located in the second cell.

Preferably, the method further includes determining whether the user equipment is located in the specific region based on the location information of the user equipment.

Preferably, the setting the waveform parameter includes: acquiring channel information based on the location information of the user equipment and the other user equipment; acquiring waveform parameter information of the user equipment and the other user equipment; and setting waveform parameters of the user equipment and the other user equipment based on the channel information and the waveform parameter information, to meet a demodulated signal-to-interference-plus-noise ratio requirement or a demodulated signal-noise-ratio requirement of the receiving end.

Preferably, the setting the power adjustment factor includes: determining that the set waveform parameter does not meet the demodulated signal-to-interference-plus-noise ratio requirement or the demodulated signal-noise-ratio requirement of the receiving end; and further setting power adjustment factors based on the channel information, to meet the demodulated signal-to-interference-plus-noise ratio requirement or the demodulated signal-noise-ratio requirement of the receiving end.

Preferably, the waveform parameter includes a filter overlapping factor.

Preferably, the wireless communication system is a cognitive radio communication system, a first cell is a first secondary system, and a second cell is a second secondary system, and the method is executed by a spectrum coordinator in a core network.

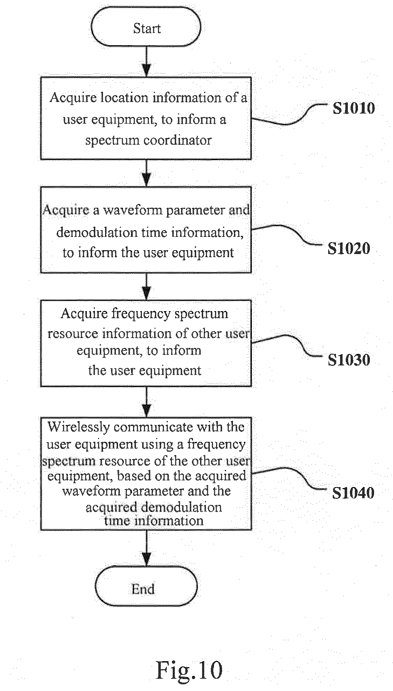

A wireless communication method in a wireless communication system according to another embodiment of the present disclosure is described below with reference to Fig. 10.

Fig. 10 is a flow diagram of a wireless communication method according to another embodiment of the present disclosure. The wireless communication method is applied into a wireless communication system, and the wireless communication system at least includes a first cell and a second cell.

As shown in Fig. 10, in step S1010, location information of a user equipment in a first cell is acquired to inform a spectrum coordinator in a core network.

In step S1020, a waveform parameter and demodulation time information are acquired from the spectrum coordinator to inform the user equipment.

In step S1030, frequency spectrum resource information of other user equipment in the second cell is acquired from the spectrum coordinator to inform the user equipment.

In step S1040, the communication with the user equipment is performed wirelessly using a frequency spectrum resource of other user equipment based on the acquired waveform parameter and the acquired demodulation time information.

Preferably, the method further includes: acquiring a power adjustment factor from the spectrum coordinator to inform the user equipment; and wirelessly communicating with the user equipment using a frequency spectrum resource of other user equipment based on the acquired waveform parameter and the acquired power adjustment factor.

Preferably, the method further includes acquiring waveform parameter information of the user equipment to inform the spectrum coordinator.

Preferably, the user equipment is located in a specific region in the first cell, and the user equipment in the specific region is interfered by the second cell.

Preferably, the waveform parameter includes a filter overlapping factor.

Preferably, the wireless communication system is a cognitive radio communication system, the first cell is a first secondary system, and the second cell is a second secondary system, and the method is executed by the base station in the first cell.

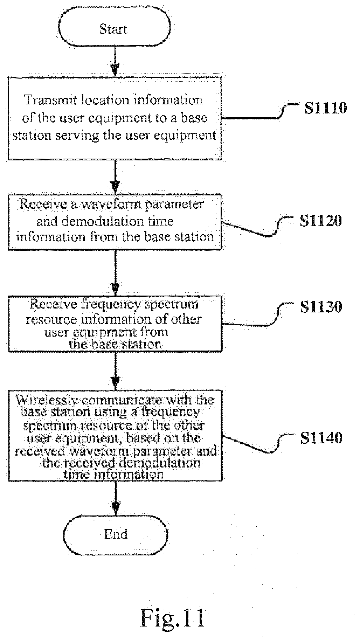

A wireless communication method in a wireless communication system according to another embodiment of the present disclosure is described below with reference to Fig. 11.

Fig. 11 is a flow diagram of a wireless communication method according to another embodiment of the present disclosure. The wireless communication method is applied into the wireless communication system, and the wireless communication system includes multiple user equipments and at least one base station.

As shown in Fig. 11, in step S1110, location information of the user equipment is transmitted to the base station serving the user equipment.

In step S1120, a waveform parameter and demodulation time information are received from the base station.

In step S1130, frequency spectrum resource information of other user equipment is received from the base station.

In step S1140, the communication with the base station is performed wirelessly using a frequency spectrum resource of the other user equipment based on the received waveform parameter and the received demodulation time information.

Preferably, the wireless communication system at least includes a first cell and a second cell, the user equipment is located in the first cell, and other user equipment is located in the second cell.

Preferably, the method further includes: receiving a power adjustment factor from the base station, and wirelessly communicating with the base station using a frequency spectrum resource of other user equipment based on the received waveform parameter and the received power adjustment factor,

Preferably, the method further includes transmitting waveform parameter information of the user equipment to the base station.

Preferably, the user equipment is located in a specific region in the first cell, and the user equipment in the specific region is interfered by the second cell.

Preferably, the waveform parameter includes a filter overlapping factor.

Preferably, the wireless communication system is a cognitive radio communication system, the first cell is a first secondary system, and the second cell is a second secondary system.

Various implementations of the above steps of the wireless communication method in the wireless communication system in the embodiments of the present disclosure are described in detail above, and are not described repeatedly here anymore.

The technology according to the present disclosure can be applied to various types of products. For example, the base station mentioned in the present disclosure may be implemented as any type of evolution Node B (eNB), such as a macro eNB and a small eNB. The small eNB may be an eNB covering a cell smaller than a macro cell, such as a pico eNB, a micro eNB or a home (femto) eNB. Alternatively, the base station may be implemented as any other type of base station, such as a NodeB and a base transceiver station (BTS). The base station may include: a main body (also referred to as a base station apparatus) configured to control wireless communication; and one or more remote radio heads (RRH) arranged at positions different from the main body. In addition, various types of terminals described below may operate as a base station by performing functions of the base station temporarily or in a semi-persistent manner.

For example, the UE mentioned in the present disclosure may be implemented as a mobile terminal (such as a smartphone, a tablet personal computer (PC), a notebook PC, a portable game terminal, a portable/dongle mobile router and a digital camera device) or an in-vehicle terminal (such as a car navigation apparatus). The UE may also be implemented as a terminal (also referred to as a machine-type communication (MTC) terminal) performing machine to machine (M2M) communication. In addition, the UE may be a wireless communication module (such as an integrated circuit module including a single chip) installed on each of the above terminals.

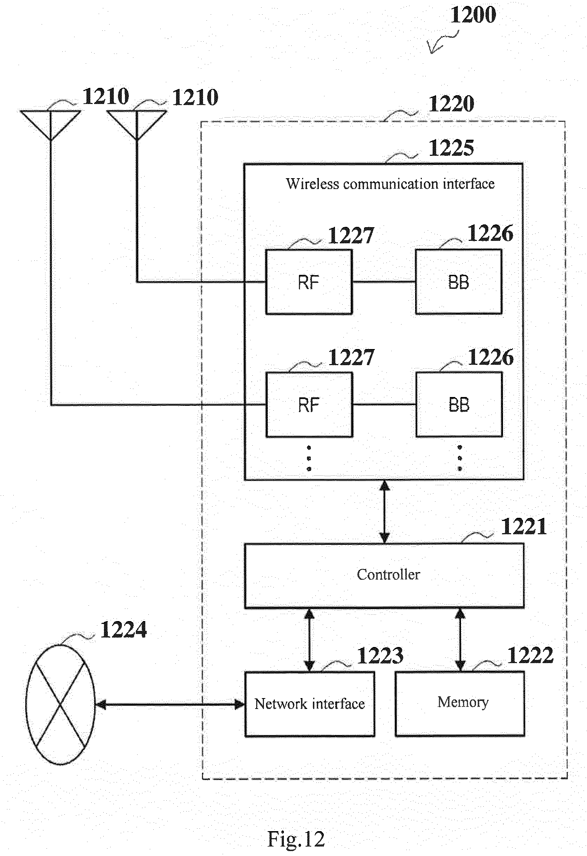

Fig. 12 is a block diagram showing a first schematic configuration example of an eNB to which the technology of the present disclosure may be applied. An eNB 1200 includes one or more antennas 1210 and a base station apparatus 1220. Each antenna 1210 and the base station apparatus 1220 may be connected to each other via an RF cable.

Each of the antennas 1210 includes a single or multiple antenna elements (such as multiple antenna elements included in an multi-input multi-output (MIMO) antenna), and is used for the base station apparatus 1220 to transmit and receive radio signals. As shown in Fig. 12, the eNB 1200 may include the multiple antennas 1210. For example, the multiple antennas 1210 may be compatible with multiple frequency bands used by the eNB 1200. Although Fig. 12 shows the example in which the eNB 1200 includes the multiple antennas 1210, the eNB 1200 may also include a single antenna 1210.

The base station apparatus 1220 includes a controller 1221, a memory 1222, a network interface 1223, and a wireless communication interface 1225.

The controller 1221 may be, for example, a CPU or a DSP, and operates various functions of a higher layer of the base station apparatus 1220. For example, the controller 1221 generates a data packet from data in signals processed by the wireless communication interface 1225, and transfers the generated packet via the network interface 1223. The controller 1221 may bundle data from multiple base band processors to generate the bundled packet, and transfer the generated bundled packet. The controller 1221 may have logical functions of performing control such as radio resource control, radio bearer control, mobility management, admission control and scheduling. The control may be performed in corporation with an eNB or a core network node in the vicinity. The memory 1222 includes a RAM and a ROM, and stores a program executed by the controller 1221, and various types of control data (such as a terminal list, transmission power data, and scheduling data).

The network interface 1223 is a communication interface for connecting the base station apparatus 1220 to a core network 1224. The controller 1221 may communicate with a core network node or another eNB via the network interface 1223. In that case, the eNB 1200, and the core network node or the other eNB may be connected to each other through a logical interface (such as an S1 interface and an X2 interface). The network interface 1223 may also be a wired communication interface or a wireless communication interface for wireless backhaul. If the network interface 1223 is a wireless communication interface, the network interface 1223 may use a higher frequency band for wireless communication than a frequency band used by the wireless communication interface 1225.

The wireless communication interface 1225 supports any cellular communication scheme (such as Long Term Evolution (LTE) and LTE-Advanced), and provides wireless connection to a terminal positioned in a cell of the eNB 1200 via the antenna 1210. The wireless communication interface 1225 may typically include, for example, a baseband (BB) processor 1226 and an RF circuit 1227. The BB processor 1226 may perform, for example, encoding/decoding, modulating/demodulating, and multiplexing/demultiplexing, and performs various types of signal processing of layers (such as L1, medium access control (MAC), wireless link control (RLC), and a packet data convergence protocol (PDCP)). The BB processor 1226 may have a part or all of the above-described logical functions instead of the controller 1221. The BB processor 1226 may be a memory that stores a communication control program, or a module that includes a processor and a related circuit configured to execute the program. Updating the program may allow the functions of the BB processor 1226 to be changed. The module may be a card or a blade that is inserted into a slot of the base station apparatus 1220. Alternatively, the module may also be a chip that is mounted on the card or the blade. Meanwhile, the RF circuit 1227 may include, for example, a mixer, a filter, and an amplifier, and transmits and receives wireless signals via the antenna 1210.

As shown in Fig. 12, the wireless communication interface 1225 may include the multiple BB processors 1226. For example, the multiple BB processors 1226 may be compatible with multiple frequency bands used by the eNB 1200. As shown in Fig. 12, the wireless communication interface 1225 may include the multiple RF circuits 1227. For example, the multiple RF circuits 1227 may be compatible with multiple antenna elements. Although Fig. 12 shows the example in which the wireless communication interface 1225 includes the multiple BB processors 1226 and the multiple RF circuits 1227, the wireless communication interface 1225 may also include a single BB processor 1226 or a single RF circuit 1227.

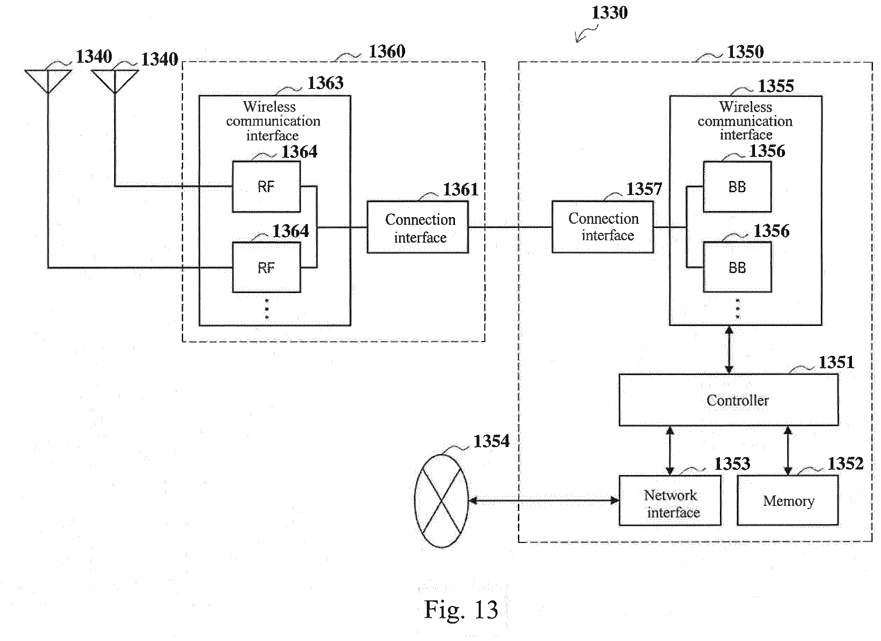

Fig. 13 is a block diagram showing a second schematic configuration example of an eNB to which the technology of the present disclosure may be applied. An eNB 1330 includes one or more antennas 1340, a base station apparatus 1350, and an RRH 1360. Each antenna 1340 and the RRH 1360 may be connected to each other via an RF cable. The base station apparatus 1350 and the RRH 1360 may be connected to each other via a high speed line such as an optical fiber cable.

Each of the antennas 1340 includes a single or multiple antenna elements (such as multiple antenna elements included in an MIMO antenna), and is used for the RRH 1360 to transmit and receive radio signals. As shown in Fig. 13, the eNB 1330 may include the multiple antennas 1340. For example, the multiple antennas 1340 may be compatible with multiple frequency bands used by the eNB 1330. Although Fig. 11 shows the example in which the eNB 1330 includes the multiple antennas 1340, the eNB 1330 may also include a single antenna 1340.

The base station apparatus 1350 includes a controller 1351, a memory 1352, a network interface 1353, a wireless communication interface 1355, and a connection interface 1357. The controller 1351, the memory 1352, and the network interface 1353 are the same as the controller 1221, the memory 1222, and the network interface 1223 described with reference to Fig. 13.

The wireless communication interface 1355 supports any cellular communication scheme (such as LTE and LTE-Advanced), and provides wireless communication to a terminal positioned in a sector corresponding to the RRH 1360 via the RRH 1360 and the antenna 1340. The wireless communication interface 1355 may typically include, for example, a BB processor 1356. The BB processor 1356 is the same as the BB processor 1226 described with reference to Fig. 12, except the BB processor 1356 is connected to the RF circuit 1364 of the RRH 1360 via the connection interface 1357. As shown in Fig. 13, the wireless communication interface 1355 may include the multiple BB processors 1356. For example, the multiple BB processors 1356 may be compatible with multiple frequency bands used by the eNB 1330. Although Fig. 13 shows the example in which the wireless communication interface 1355 includes the multiple BB processors 1356, the wireless communication interface 1355 may also include a single BB processor 1356.

The connection interface 1357 is an interface for connecting the base station apparatus 1350 (wireless communication interface 1355) to the RRH 1360. The connection interface 1357 may also be a communication module for communication in the above-described high speed line that connects the base station apparatus 1350 (wireless communication interface 1355) to the RRH 1360.

The RRH 1360 includes a connection interface 1361 and a wireless communication interface 1363.

The connection interface 1361 is an interface for connecting the RRH 1360 (the wireless communication interface 1363) to the base station apparatus 1350. The connection interface 1361 may also be a communication module for communication in the above-described high speed line.

The wireless communication interface 1363 transmits and receives wireless signals via the antenna 1340. The wireless communication interface 1363 may typically include, for example, the RF circuit 1364. The RF circuit 1364 may include, for example, a mixer, a filter, and an amplifier, and transmits and receives wireless signals via the antenna 1340. As shown in Fig. 13, the wireless communication interface 1363 may include multiple RF circuits 1364. For example, the multiple RF circuits 1364 may support multiple antenna elements. Although Fig. 13 shows the example in which the wireless communication interface 1363 includes the multiple RF circuits 1364, the wireless communication interface 1363 may also include a single RF circuit 1364.

In the eNB 1200 shown in Fig. 12 and eNB 1330 shown in Fig. 13, the processing circuit 210 and the acquiring unit 211, the setting unit 212 and the allocating unit 213 in the processing circuit 210 described with reference to Fig. 2, and the processing circuit 710 and the location managing unit 711, the parameter managing unit 712 and the frequency spectrum managing unit 713 in the processing circuit 710 described with reference to Fig, 7 may be implemented by the controller 1221 and/or the controller 1351, and the communication unit 220 described with reference to Fig. 2 and the communication unit 720 described with reference to Fig. 7 may be implemented by the wireless communication interface 1225 and the wireless communication interface 1355 and/or the wireless communication interface 1363. At least a part of the functions may also be implemented by the controller 1221 and the controller 1351. For example, the controller 1221 and/or the controller 1351 may implement the functions of acquiring location information, setting and acquiring a waveform parameter and a power adjustment factor and allocating a resource by executing instructions stored in memories.

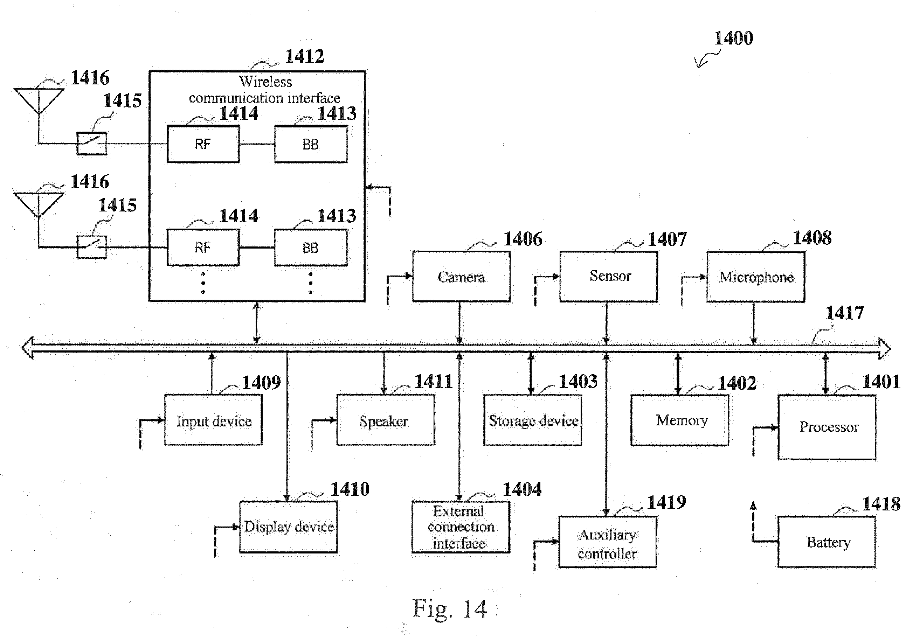

Fig. 14 is a block diagram showing a schematic configuration example of a smartphone 1400 to which the technology of the present disclosure may be applied. The smartphone 1400 includes a processor 1401, a memory 1402, a storage 1403, an external connection interface 1404, a camera 1406, a sensor 1407, a microphone 1408, an input device 1409, a display device 1410, a speaker 1411, a wireless communication interface 1412, one or more antenna switches 1415, one or more antennas 1416, a bus 1417, a battery 1418, and an auxiliary controller 1419.

The processor 1401 may be, for example, a CPU or a system on a chip (SoC), and controls functions of an application layer and another layer of the smartphone 1400. The memory 1402 includes a RAM and a ROM, and stores a program that is executed by the processor 1401 and data. The storage 1403 may include a storage medium such as a semiconductor memory and a hard disk. The external connection interface 1404 is an interface for connecting an external device (such as a memory card and a universal serial bus (USB) device) to the smartphone 1400.

The camera 1406 includes an image sensor (such as a charge coupled device (CCD) and a complementary metal oxide semiconductor (CMOS)), and generates a captured image. The sensor 1407 may include a group of sensors such as a measurement sensor, a gyro sensor, a geomagnetic sensor and an acceleration sensor. The microphone 1408 converts sounds that are input to the smartphone 1400 to audio signals. The input device 1409 includes, for example, a touch sensor configured to detect touch onto a screen of the display device 1410, a keypad, a keyboard, a button or a switch, and receives an operation or an information input from a user. The display device 1410 includes a screen such as a liquid crystal display (LCD) and an organic light-emitting diode (OLED) display, and displays an output image of the smartphone 1400. The speaker 1411 converts audio signals outputted from the smartphone 1400 to sounds.

The wireless communication interface 1412 supports any cellular communication scheme (such as LET and LTE-Advanced), and performs wireless communication. The wireless communication interface 1412 may typically include, for example, a BB processor 1413 and an RF circuit 1414. The BB processor 1413 may perform, for example, encoding/decoding, modulating/demodulating, and multiplexing/demultiplexing, and performs various types of signal processing for wireless communication. Meanwhile, the RF circuit 1414 may include, for example, a mixer, a filter and an amplifier, and transmits and receives wireless signals via the antenna 1416. The wireless communication interface 1412 may be a one chip module having the BB processor 1413 and the RF circuit 1414 integrated thereon. As shown in Fig. 14, the wireless communication interface 1412 may include the multiple BB processors 1413 and the multiple RF circuits 1414. Although Fig. 14 shows the example in which the wireless communication interface 1412 includes the multiple BB processors 1413 and the multiple RF circuits 1414, the wireless communication interface 1412 may also include a single BB processor 1413 or a single RF circuit 1414.

Furthermore, in addition to a cellular communication scheme, the wireless communication interface 1412 may support another type of wireless communication scheme such as a short-distance wireless communication scheme, a near field communication scheme, and a wireless local area network (LAN) scheme. In that case, the wireless communication interface 1412 may include the BB processor 1413 and the RF circuit 1414 for each wireless communication scheme.

Each of the antenna switches 1415 switches connection destinations of the antennas 1416 among multiple circuits (such as circuits for different wireless communication schemes) included in the wireless communication interface 1412.

Each of the antennas 1416 includes a single or multiple antenna elements (such as multiple antenna elements included in an MIMO antenna), and is used for the wireless communication interface 1412 to transmit and receive wireless signals. As shown in Fig. 14, the smartphone 1400 may include the multiple antennas 1416. Although Fig. 14 shows the example in which the smartphone 1400 includes the multiple antennas 1416, the smartphone 1400 may also include a single antenna 1416.

Furthermore, the smartphone 1400 may include the antenna 1416 for each wireless communication scheme. In that case, the antenna switches 1415 may be omitted from the configuration of the smartphone 1400.

The bus 1417 connects the processor 1401, the memory 1402, the storage 1403, the external connection interface 1404, the camera 1406, the sensor 1407, the microphone 1408, the input device 1409, the display device 1410, the speaker 1411, the wireless communication interface 1412, and the auxiliary controller 1419 to each other. The battery 1418 supplies power to blocks of the smartphone 1400 shown in Fig. 14 via feeder lines, which are partially shown as dashed lines in the Fig. 14. The auxiliary controller 1419 operates a minimum necessary function of the smartphone 1400, for example, in a sleep mode.

In the smartphone 1400 shown in Fig. 14, the processing circuit 810 described with reference to Fig. 8 and the location managing unit 811, the parameter managing unit 812 and the frequency spectrum managing unit 813 in the processing circuit 810 may be implemented by the processor 1401 or the auxiliary controller 1419, and the communication unit 820 described in Fig. 8 may be implemented by the wireless communication interface 1412. At least a part of the functions may also be implemented by the processor 1401 or the auxiliary controller 1419. For example, the processor 1401 or the auxiliary controller 1419 can implement the functions of transmitting location information, receiving a waveform parameter and a power adjustment factor through the communication unit 820 and wirelessly communicating with the base station by executing instructions stored in the memory 1402 or the storage 1403.

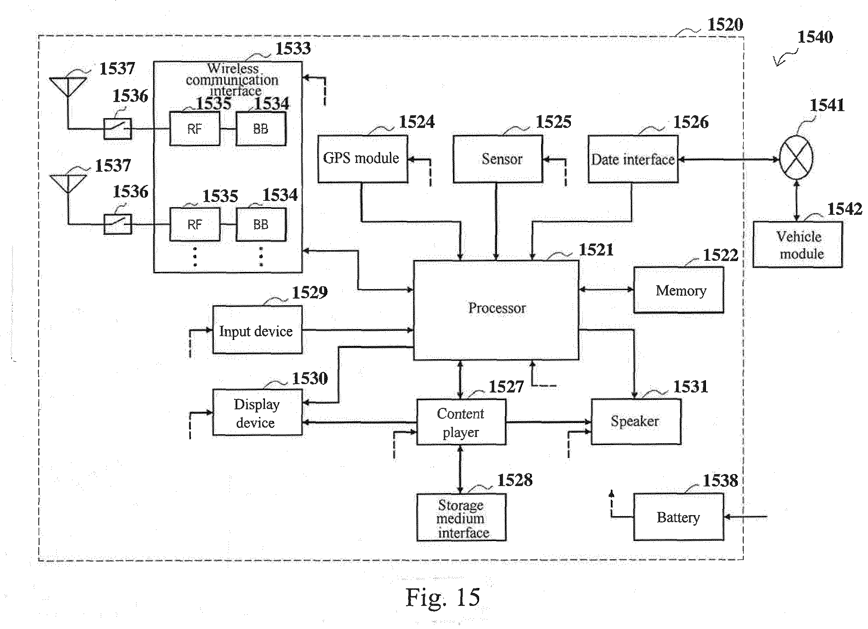

Fig. 15 is a block diagram showing a schematic configuration example of a car navigation apparatus 1520 to which the technology of the present disclosure may be applied. The car navigation apparatus 1520 includes a processor 1521, a memory 1522, a global positioning system (GPS) module 1524, a sensor 1525, a data interface 1526, a content player 1527, a storage medium interface 1528, an input device 1529, a display device 1530, a speaker 1531, a wireless communication interface 1533, one or more antenna switches 1536, one or more antennas 1537 and a battery 1538.

The processor 1521 may be, for example, a CPU or a SoC, and controls a navigation function and another function of the car navigation apparatus 1520. The memory 1522 includes a RAM and a ROM, and stores a program executed by the processor 1521 and data.

The GPS module 1524 uses GPS signals received from a GPS satellite to determine a position (such as latitude, longitude, and altitude) of the car navigation apparatus 1520. The sensor 1525 may include a group of sensors such as a gyro sensor, a geomagnetic sensor, and an air pressure sensor. The data interface 1526 is connected to, for example, an in-vehicle network 1541 via a terminal that is not shown, and acquires data (such as vehicle speed data) generated by the vehicle.

The content player 1527 reproduces content stored in a storage medium (such as a CD and a DVD) that is inserted into the storage medium interface 1528. The input device 1529 includes, for example, a touch sensor configured to detect touch onto a screen of the display device 1530, a button or a switch, and receives an operation or an information inputted from a user. The display device 1530 includes a screen such as a LCD or an OLED display, and displays an image of the navigation function or content that is reproduced. The speaker 1531 outputs sounds of the navigation function or the content that is reproduced.

The wireless communication interface 1533 supports any cellular communication scheme (such as LTE and LTE-Advanced), and performs wireless communication. The wireless communication interface 1533 may typically include, for example, a BB processor 1534 and an RF circuit 1535. The BB processor 1534 may perform, for example, encoding/decoding, modulating/demodulating, and multiplexing/demultiplexing, and performs various types of signal processing for wireless communication. Meanwhile, the RF circuit 1535 may include, for example, a mixer, a filter, and an amplifier, and transmits and receives wireless signals via the antenna 1537. The wireless communication interface 1533 may also be a one chip module that has the BB processor 1534 and the RF circuit 1535 integrated thereon. As shown in Fig. 15, the wireless communication interface 1533 may include the multiple BB processors 1534 and the multiple RF circuits 1535. Although Fig. 15 shows the example in which the wireless communication interface 1533 includes the multiple BB processors 1534 and the multiple RF circuits 1535, the wireless communication interface 1533 may also include a single BB processor 1534 or a single RF circuit 1535.

Furthermore, in addition to the cellular communication scheme, the wireless communication interface 1533 may support another type of wireless communication scheme such as a short-distance wireless communication scheme, a near field communication scheme, and a wireless LAN scheme. In that case, the wireless communication interface 1533 may include the BB processor 1534 and the RF circuit 1535 for each wireless communication scheme.

Each of the antenna switches 1536 switches connection destinations of the antennas 1537 among multiple circuits (such as circuits for different wireless communication schemes) included in the wireless communication interface 1533.

Each of the antennas 1537 includes a single or multiple antenna elements (such as multiple antenna elements included in an MIMO antenna), and is used for the wireless communication interface 1533 to transmit and receive wireless signals. As shown in Fig. 15, the car navigation apparatus 1520 may include the multiple antennas 1537. Although Fig. 15 shows the example in which the car navigation apparatus 1520 includes the multiple antennas 1537, the car navigation apparatus 1520 may also include a single antenna 1537.

Furthermore, the car navigation apparatus 1520 may include the antenna 1537 for each wireless communication scheme. In that case, the antenna switches 1536 may be omitted from the configuration of the car navigation apparatus 1520.

The battery 1538 supplies power to blocks of the car navigation apparatus 1520 shown in Fig. 15 via feeder lines that are partially shown as dashed lines in the Fig. 15. The battery 1538 accumulates power supplied form the vehicle.

In the car navigation apparatus 1520 shown in Fig. 15, the processing circuit 810 described with reference to Fig. 8 and the location managing unit 811, the parameter managing unit 812 and the spectrum managing unit 813 thereof may be implemented by the processer 1521, and the communication unit 820 described with reference to Fig. 8 may be implemented by the wireless communication interface 1533. At least a part of the functions may also be implemented by the processor 1521. For example, the processor 1521 can implement the functions of transmitting location information, receiving a waveform parameter and a power adjustment factor through the communication unit 820 and wirelessly communicating with the base station by executing instructions stored in the memory 1522.

The technology of the present disclosure may also be implemented as an in-vehicle system (or a vehicle) 1540 including one or more blocks of the car navigation apparatus 1520, the in-vehicle network 1541 and a vehicle module 1542. The vehicle module 1542 generates vehicle data (such as a vehicle speed, an engine speed or failure information), and outputs the generated data to the in-vehicle network 1541.

In the system and method according to the present disclosure, the respective components or steps can be decomposed and/or recombined. These decompositions and/or recombination shall be regarded as equivalent solutions of the present disclosure. Moreover, steps for executing the above series of processing can naturally be executed chronologically in the sequence as described above, but is not limited thereto, and some of the steps can be performed in parallel or individually.

Although the embodiments of the present disclosure have been described above in detail in connection with the drawings, it shall be appreciated that the embodiments as described above are merely illustrative rather than limitative for the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1.    An electronic device in a wireless communication system, wherein the wireless communication system comprises a plurality of user equipments and at least one base station, the electronic device comprises one or more processing circuits configured to:

acquire location information and waveform parameter information of the user equipment;
set waveform parameters based on the location information and the waveform parameter information of the user equipment; and
acquire frequency spectrum resource information of other user equipment, allocate a frequency spectrum resource of the other user equipment to the user equipment based on the frequency spectrum resource information, so that the user equipment uses a frequency spectrum resource of the other user equipment based on the set waveform parameter.

2. The electronic device according to claim 1, wherein the one or more processing circuits are further configured to:

acquire location information of the other user equipment, and set the waveform parameters based on the location information and the waveform parameter information of the user equipment along with the location information of the other user equipment.

3. The electronic device according to claim 2, wherein the one or more processing circuits are further configured to:

set power adjustment factors based on the location information of the user equipment and the location information of the other user equipment; and
acquire frequency spectrum resource information of the other user equipment, and allocate the frequency spectrum resource of the other user equipment to the user equipment, so that the user equipment uses the frequency spectrum resource of the other user equipment based on the set waveform parameter and the set power adjustment factor.

4. The electronic device according to claim 3, wherein the wireless communication system at least comprises a first cell and a second cell, wherein the user equipment is located in a specific region in the first cell, the user equipment in the specific region is interfered by the second cell, and the other user equipment is located in the second cell.

5. The electronic device according to claim 4, wherein the one or more processing circuits are further configured to determine whether the user equipment is located in the specific region based on the location information of the user equipment.

6. The electronic device according to claim 3, wherein when setting the waveform parameters, the one or more processing circuits are further configured to:

acquire channel information based on the location information of the user equipment and the location information of the other user equipment;
acquire the waveform parameter information of the user equipment and waveform parameter information of the other user equipment; and
set the waveform parameter of the user equipment and the waveform parameter of the other user equipment based on the channel information and the waveform parameter information, to meet a demodulation signal-to-interference-noise ratio requirement or a demodulation signal-to-noise ratio requirement of a receiving end.

7. The electronic device according to claim 6, wherein when setting the power adjustment factors, the one or more processing circuits are further configured to:

determine that the set waveform parameter does not meet the demodulation signal-to-interference-noise ratio requirement or the demodulation signal-to-noise ratio requirement of a receiving end; and
further set the power adjustment factors based on the channel information, to meet the demodulation signal-to-interference-noise ratio requirement or the demodulation signal-to-noise ratio requirement of the receiving end.

8. The electronic device according to claim 2, wherein the waveform parameter comprises a filter overlapping factor.

9. The electronic device according to any one of claims 4 to 8, wherein the wireless communication system is a cognitive radio communication system, the first cell is a first secondary system, the second cell is a second secondary system, and the electronic device is a spectrum coordinator in a core network.

10. An electronic device in a wireless communication system, wherein the wireless communication system at least comprises a first cell where the electronic device is located and a second cell, and the electronic device comprises one or more processing circuits configured to:

acquire location information of a user equipment in the first cell, to inform a spectrum coordinator in a core network; acquire a waveform parameter and demodulation time information from the spectrum coordinator, to inform the user equipment;

acquire frequency spectrum resource information of other user equipment in the second cell from the spectrum coordinator, to inform the user equipment; and

wirelessly communicate with the user equipment using a frequency spectrum resource of the other user equipment, based on the acquired waveform parameter and the acquired demodulation time information.

11. The electronic device according to claim 10, wherein the one or more processing circuits are further configured to:

acquire a power adjustment factor from the spectrum coordinator to inform the user equipment; and wirelessly communicate with the user equipment using the frequency spectrum resource of the other user equipment, based on the acquired waveform parameter.

12. The electronic device according to claim 10, wherein the one or more processing circuits are further configured to acquire waveform parameter information of the user equipment to inform the spectrum coordinator.

13. The electronic device according to claim 11, wherein the user equipment is located in a specific region in the first cell, the user equipment in the specific region is interfered by the second cell.

14. The electronic device according to claim 10, wherein the waveform parameter comprises a filter overlapping factor.

15. The electronic device according to any one of claims 10 to 14, wherein the wireless communication system is a cognitive radio communication system, the first cell is a first secondary system, the second cell is a second secondary system, and the electronic device is a base station in the first cell.

16. A user equipment in a wireless communication system, wherein the wireless communication system comprises a plurality of user equipments and at least one base station, the user equipment comprises:

a transceiver; and
one or more processing circuits configured to:

cause the transceiver to transmit location information of the user equipment to a base station serving the user equipment;
cause the transceiver to receive a waveform parameter and demodulation time information from the base station;
cause the transceiver to receive frequency spectrum resource information of other user equipment from the base station; and
wirelessly communicate with the base station using a frequency spectrum resource of the other user equipment, based on the received waveform parameter and the received demodulation time information.

17. The user equipment according to claim 16, wherein the wireless communication system at least comprises a first cell where the user equipment is located and a second cell where the other user equipment is located.

18. The user equipment according to claim 17, wherein the one or more processing circuits are further configured to:

cause the transceiver to receive a power adjustment factor and the demodulation time information from the base station; and
wirelessly communicate with the base station using the frequency spectrum resource of the other user equipment, based on the received waveform parameter and the received power adjustment factor.

19. The user equipment according to claim 17, wherein the one or more processing circuits are further configured to cause the transceiver to transmit waveform parameter information of the user equipment to the base station.

20. The user equipment according to claim 18, wherein the user equipment is located in a specific region in the first cell, and the user equipment in the specific region is interfered by the second cell.

21. The user equipment according to claim 17, wherein the waveform parameter comprises a filter overlapping factor

**22.** The user equipment according to any one of claims 17 to 21, wherein the wireless communication system is a cognitive radio communication system, the first cell is a first secondary system, and the second cell is a second secondary system.

**23.** A wireless communication method in a wireless communication system, comprising:

acquiring location information and waveform parameter information of a user equipment;
setting waveform parameters based on the location information and the waveform parameter information of the user equipment; and
acquiring frequency spectrum resource information of other user equipment, and allocating a frequency spectrum resource of the other user equipment to the user equipment based on the frequency spectrum resource information, so that the user equipment uses the frequency spectrum resource of the other user equipment based on the set waveform parameter.

**24.** A wireless communication method in a wireless communication system, wherein the wireless communication system at least comprises a first cell and a second cell, and the method comprises:

acquiring location information of a user equipment in the first cell, to inform a spectrum coordinator in a core network;
acquiring a waveform parameter and demodulation time information from the spectrum coordinator, to inform the user equipment;
acquiring frequency spectrum resource information of other user equipment from the spectrum coordinator, to inform the user equipment; and
wirelessly communicating with the user equipment using a frequency spectrum resource of the other user equipment, based on the acquired waveform parameter and the acquired demodulation time information.

**25.** A wireless communication method in a wireless communication system, wherein the wireless communication system comprises a plurality of user equipments and at least one base station, and the method comprises:

transmitting location information of a user equipment to a base station serving the user equipment;
receiving a waveform parameter and demodulation time information from the base station;
receiving frequency spectrum resource information of other user equipment from the base station; and
wirelessly communicating with the base station using a frequency spectrum resource of the other user equipment, based on the received waveform parameter and the received demodulation time information.

Fig.1(a)

Fig.1(b)

Fig.2

Fig.3

Start

$\alpha_1 > \alpha_2$ — No

Yes

SS$_1$: $p_1^{(1)}, p_1^{(2)}$
SS$_2$: $p_2$

Calculate p$_2$ according
to SIR$_{2,2} \geq \gamma_2$

Calculate p$_1^{(1)}$ according
to SIR$_{2,1} \geq \gamma_1$

Calculate p$_1^{(2)}$
according to SIR$_{1,1} \geq \gamma_1$

Power adjustment factor at
the transmitting end:
p$_1$=max{p$_1^{(1)}$, p$_1^{(2)}$}, p$_2$

SS$_1$: $p_1$
SS$_2$: $p_2^{(1)}, p_2^{(2)}$

Calculate p$_1$ according
to SIR$_{1,1} \geq \gamma_1$

Calculate p$_2^{(1)}$ according
to SIR$_{1,2} \geq \gamma_2$

Calculate p$_2^{(2)}$ according
to SIR$_{2,2} \geq \gamma_2$

Power adjustment factor at
the transmitting end:
p$_1$, p$_2$=max{p$_1^{(1)}$, p$_1^{(2)}$}

End

Fig.4

Start

New user reports location information,
waveform parameter information and
transmission mode information, existing user
updates location information and transmission
mode information

Whether there is available
idle frequency spectrum? — Yes

Allocate the idle
frequency spectrum

No

Whether the new user
is located in the strong
interference region? — No

Allocate to the new user equipment
a frequency spectrum of a user
which has the same transmission
mode as the new user and is located
in a region other than the strong
interference region in
an adjacent system

Yes

Whether the
transmission mode information
of the new user is uplink
transmission? — No

Yes

Allocate to the new user equipment a
frequency spectrum of a user which has
the same transmission mode as the new
user and is located in an adjacent system

Acquire a channel coefficient
h$_{i,j}$ (i=1, 2; j=1, 2)

Determine a waveform parameter and/or a
power adjustment factor (including
demodulation time information) of the
transmitting end according to
uplink algorithm

Allocate to the new user equipment a
frequency spectrum of a user which has
the same transmission mode as the new
user and is located in an adjacent system

Acquire a channel coefficient
h$_{i,j}$ (i=1, 2; j=1, 2)

Determine a waveform parameter and/or a
power adjustment factor (including
demodulation time information) of the
transmitting end according to
downlink algorithm

End

Fig.5

Fig.6

Fig.7

Fig.8

Fig.9

```
          ┌──────────────┐
          │    Start      │
          └──────────────┘
                 │
                 ▼
┌─────────────────────────────┐
│ Acquire location information of a │ ────────⌒  S1010
│   user equipment, to inform a    │
│      spectrum coordinator        │
└─────────────────────────────┘
                 │
                 ▼
┌─────────────────────────────┐
│ Acquire a waveform parameter and │
│   demodulation time information,  │ ────────⌒  S1020
│    to inform the user equipment   │
└─────────────────────────────┘
                 │
                 ▼
┌─────────────────────────────┐
│    Acquire frequency spectrum     │
│ resource information of other user │
│        equipment, to inform        │ ────────⌒  S1030
│         the user equipment         │
└─────────────────────────────┘
                 │
                 ▼
┌─────────────────────────────┐
│ Wirelessly communicate with the   │
│ user equipment using a frequency   │
│ spectrum resource of the other user│
│ equipment, based on the acquired   │ ────────⌒  S1040
│    waveform parameter and the      │
│      acquired demodulation         │
│        time information            │
└─────────────────────────────┘
                 │
                 ▼
          ┌──────────────┐
          │     End       │
          └──────────────┘
```

Fig.10

```
                    ┌──────────────┐
                    │    Start     │
                    └──────────────┘
                            │
                            ▼
        ┌──────────────────────────────┐
        │  Transmit location information │────── S1110
        │   of the user equipment to a base │
        │ station serving the user equipment│
        └──────────────────────────────┘
                            │
                            ▼
        ┌──────────────────────────────┐
        │  Receive a waveform parameter  │────── S1120
        │    and demodulation time        │
        │  information from the base station│
        └──────────────────────────────┘
                            │
                            ▼
        ┌──────────────────────────────┐
        │  Receive frequency spectrum    │────── S1130
        │  resource information of other  │
        │     user equipment from         │
        │       the base station          │
        └──────────────────────────────┘
                            │
                            ▼
        ┌──────────────────────────────┐
        │ Wirelessly communicate with the│
        │  base station using a frequency │
        │  spectrum resource of the other │────── S1140
        │  user equipment, based on the   │
        │ received waveform parameter and │
        │   the received demodulation     │
        │        time information         │
        └──────────────────────────────┘
                            │
                            ▼
                    ┌──────────────┐
                    │     End      │
                    └──────────────┘
```

Fig.11

**1200**

**1210**   **1210**   **1220**

**1225**

Wireless communication interface

**1227**   **1226**

RF   BB

**1227**   **1226**

RF   BB

**1221**

Controller

**1224**

**1223**   **1222**

Network interface   Memory

Fig.12

Fig. 13

EP 3 402 258 A1

Fig. 14

Fig. 15

# INTERNATIONAL SEARCH REPORT

| International application No. |
| --- |
| **PCT/CN2017/070125** |

**A.  CLASSIFICATION OF SUBJECT MATTER**

H04W 52/24 (2009.01) i

According to International Patent Classification (IPC) or to both national classification and IPC

**B.   FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, IEEE: the same frequency, power adjustment factor, power distribution factor, filter parameter, filter aliasing factor, non-orthogonal multiple access, NOMA, edge; frequency spectrum, share, location, interference, far, near, center, area, waveform parameter, power

**C.  DOCUMENTS CONSIDERED TO BE RELEVANT**

| Category* | Citation of document, with indication, where appropriate, of the relevant passages | Relevant to claim No. |
| --- | --- | --- |
| X | CN 104158631 A (BEIJING UNIVERSITY OF POSTS AND TELECOMMUNICATIONS et al.), 19 November 2014 (19.11.2014), description, paragraphs [0049] and [0055]-[0073] | 1-25 |
| X | ZHANG, Chen; "Research on Cooperative Communication Technology in Heterogeneous Network", CHINA MASTER'S THESES FULL-TEXT DATABASE, 01 April 2014 (01.04.2014), pages 43-49, and figure 4-1 | 1-25 |
| A | CN 103686976 A (BEIJING UNIVERSITY OF POSTS AND TELECOMMUNICATIONS), 26 March 2014 (26.03.2014), the whole document | 1-25 |
| A | WO 2014122994 A1 (NTT DOCOMO, INC.), 14 August 2014 (14.08.2014), the whole document | 1-25 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 March 2017 (07.03.2017) | **11 April 2017 (11.04.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SUN, Wei** Telephone No.: (86-10) **62413854** |
| --- | --- |

Form PCT/ISA/210 (second sheet) (July 2009)

## INTERNATIONAL SEARCH REPORT
### Information on patent family members

International application No.

**PCT/CN2017/070125**

| Patent Documents referred in the Report | Publication Date | Patent Family | Publication Date |
|---|---|---|---|
| CN 104158631 A | 19 November 2014 | None | |
| CN 103686976 A | 26 March 2014 | None | |
| WO 2014122994 A1 | 14 August 2014 | US 2016029350 A1 | 28 January 2016 |
| | | EP 2955952 A1 | 16 December 2015 |
| | | JP 2014154962 A | 25 August 2014 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610021159